(19) Europäisches Patentamt / European Patent Office / Office européen des brevets

(11) **EP 2 645 285 A1**

(12) **EUROPEAN PATENT APPLICATION**
published in accordance with Art. 153(4) EPC

(43) Date of publication:
**02.10.2013 Bulletin 2013/40**

(51) Int Cl.:
***G06F 21/20*** *(0000.00)*     ***H04L 9/32*** *(2006.01)*

(21) Application number: **12749301.3**

(22) Date of filing: **08.02.2012**

(86) International application number:
**PCT/JP2012/052893**

(87) International publication number:
**WO 2012/114881 (30.08.2012 Gazette 2012/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2011   JP 2011034393**

(71) Applicant: **NTT DOCOMO, INC.**
**Chiyoda-ku**
**Tokyo**
**100-6150 (JP)**

(72) Inventors:
• **TSUKAMOTO, Masakatsu**
**Tokyo 100-6150 (JP)**
• **OTA, Manabu**
**Tokyo 100-6150 (JP)**
• **MORINAGA, Yasuo**
**Tokyo 100-6150 (JP)**
• **HIGUCHI, Takeshi**
**Tokyo 100-6150 (JP)**

(74) Representative: **MERH-IP**
**Matias Erny Reichl Hoffmann**
**Paul-Heyse-Strasse 29**
**80336 München (DE)**

(54) **GRIPPING CHARACTERISTICS LEARNING AUTHENTICATION SYSTEM AND GRIPPING CHARACTERISTICS LEARNING AUTHENTICATION METHOD**

(57)    There is provided a gripping-feature learning authentication system capable of preventing impersonation. A mobile information terminal includes a trigger monitoring part outputting a gripping-feature acquisition signal, a gripping-feature sample acquisition part acquiring a gripping-feature sample, a template learning part learning a user authentication template, a template sending part sending the user authentication template, an authentication request sending/receiving part sending and receiving an authentication request, an authentication data sending part sending a terminal identification number or a gripping-feature sample, and a determination result receiving part receiving a determination result. A server includes a template receiving part receiving a user authentication template, a member template storage storing a user authentication template and member information, an authentication data receiving part receiving a terminal identification number and a gripping-feature sample, a member authentication part determining the probability that users corresponding to terminal identification numbers and gripping-feature samples belong to the same member group, and a determination result sending part sending a result of the determination.

TABLE 54Ta

MEMBER INFO TABLE 54

| USER | TERMINAL ID NUMBER | MEMBER GROUP | TEMPLATE |
|---|---|---|---|
| A | $ID_A$ | $G_1$ | $TMP_A$ |
| B | $ID_B$ | $G_1, G_2$ | $TMP_B$ |
| C | $ID_C$ | $G_3$ | $TMP_C$ |
| … | … | … | … |
| P | $ID_P$ | $G_2$ | $TMP_P$ |

TABLE 54Tb

| MEMBER GROUP | TERMINAL ID NUMBER |
|---|---|
| $G_1$ | $ID_A, ID_B, ID_G, ID_H, ...$ |
| $G_2$ | $ID_B, ID_E, ID_F, ID_P, ...$ |
| $G_3$ | $ID_C, ID_M, ID_K, ID_S, ...$ |

FIG.3

EP 2 645 285 A1

**Description**

[TECHNICAL FIELD]

The present invention relates to a gripping-feature learning authentication system and a gripping-feature learning authentication method that acquire a gripping-feature sample when a mobile information terminal is gripped and performs user authentication.

[BACKGROUND ART]

The growing impersonation crimes using voice call functions and communication functions such as email functions of fixed phones and mobile information terminals are becoming a problem of public concern. A typical impersonation using the voice call functions and communication functions is the so-called "It's me" fraud (a fraud where the criminal impersonates a family member or a friend of the victim to ask the victim to send money). In order to prevent such abuse of the functions of mobile information terminals, the security of the mobile information terminals has been ensured by user authentication at the start of use of the mobile information terminals. One example of the known user authentication means for mobile information terminals is fingerprint authentication means included in a mobile information terminal disclosed in Patent Literature 1.

Patent Literature 1 discloses a fingerprint-authentication-capable mobile information terminal that includes sending and receiving means for communicating with another mobile information terminal, fingerprint reading means, fingerprint authentication means for authenticating a read fingerprint, and means for omitting fingerprint authentication in a predetermined period of time after successful fingerprint authentication, wherein communication with another mobile information terminal is activated only if a user of the mobile information terminal is validated as the authentic owner of the mobile information terminal through successful fingerprint authentication and the sending and receiving means is deactivated after the expiration of the period in which the authentication is omitted. Since the mobile information terminal in Patent Literature 1 is configured as described above, the functionality of the mobile information terminal is disabled before the fingerprint authentication of the authentic owner to prevent a criminal use of the mobile information terminal by a malicious third party while at the same time the conventional convenience of the mobile information terminal is maintained by setting an appropriate authentication omission period after fingerprint authentication is performed.

[PRIOR ART LITERATURE]

[PATENT LITERATURE]

Patent literature 1: Japanese Patent Application Laid-Open No. 2010-128600

[SUMMARY OF THE INVENTION]

[PROBLEMS TO BE SOLVED BY THE INVENTION]

The mobile information terminal including fingerprint authentication means in Patent Literature 1 can prevent impersonation or the like in the event of loss or theft of the mobile information terminal. However, taking an "It's me" fraud as an example of impersonation, the criminal committing the "It's me" fraud does not necessarily use a mobile information terminal that the criminal picked up or stole. The mobile information terminal including fingerprint authentication means described above has no effect if the criminal committing the "It's me" fraud uses his own mobile information terminal. This is because the criminal using his own mobile information terminal can be authenticated by his own mobile information terminal with a fingerprint of his own. Furthermore, a criminal does not necessarily use a fingerprint-authentication capable mobile information terminal to commit an "It's me" fraud. In any case, the criminal committing an "It's me" fraud can attain his purpose by making a call or communicating (through email or otherwise) on his own mobile information terminal to persuade the victim by telling the victim a lie, for example telling the victim that he has changed his phone number or email address because he has signed up a new mobile information terminal contract or that he is urgently phoning from a terminal of his friend because the battery of his terminal is flat.

The cause of the fact that the fingerprint authentication described above has no effect of preventing some kind of impersonation as described above is that the fingerprint authentication authenticates only the relationship between a user and a mobile information terminal owned by the user and cannot directly authenticate the relationship between calling and called parties or the relationship between parties communicating with each other (authentication of whether the calling and called parties or communicating parties are close in relationship to each other). This does not apply only to the fingerprint authentication described above but is a common problem among all types of user authentication schemes used in mobile information terminals.

An object of the present invention is to provide a gripping-feature learning authentication system that enables authentication between a calling party and a called party and between a communicating pair to prevent impersonation using a voice call function and communication function.

[MEANS TO SOLVE THE PROBLEMS]

A gripping-feature learning authentication system of the present invention includes a mobile information terminal and a server. The mobile information terminal includes a trigger monitoring part, a gripping-feature sample acquisition part, a template learning part, a template sending part, an authentication request sending/receiving part, an authentication data sending part, and a determination result receiving part. When a sampling trigger is generated, the trigger monitoring part outputs a gripping-feature acquisition signal. The gripping-feature sample acquisition part acquires the gripping-feature acquisition signal to acquire the gripping-feature sample. The template learning part uses the gripping-feature sample to learn a user authentication template. The template sending part pairs the learned user authentication template and a terminal identification number of the mobile information terminal and sends the pair to the server. The authentication request sending/receiving part sends and receives an authentication request. The authentication data sending part sends the terminal identification number of the mobile information terminal to the server when the authentication request sending/receiving part sends an authentication request and sends a gripping-feature sample to the server when the authentication request sending/receiving part receives an authentication request. The determination result receiving part receives a result of determination made by a member authentication part from the server.

On the other hand, the server includes a template receiving part, a member template storage, an authentication data receiving part, a member authentication part and a determination result sending part. The template receiving part receives a pair of a user authentication template and a terminal identification number sent from the mobile information terminal. The member template storage stores the received user authentication template in association with member information indicating a member group to which the user of the mobile information terminal belongs. The authentication data receiving part receives a terminal identification number sent from a mobile information terminal that has sent an authentication request and a gripping-feature sample sent from a mobile information terminal that has received the authentication request. The member authentication part compares the user authentication template of each of users belonging to the member group indicated in member information corresponding to the terminal identification number received by the authentication data receiving part with the received gripping-feature sample to determine the probability that the user corresponding to the terminal identification number received by the authentication data receiving part and the user corresponding to the received gripping-feature sample belong to the same member group. The determination result sending part sends the result of the determination made by the member authentication part to the mobile information terminal that has sent the authentication request.

[EFFECTS OF THE INVENTION]

A gripping-feature learning authentication system of the present invention enables authentication between calling and called parties and between a communicating pair to prevent impersonation using a voice call function and a communication function.

[BRIEF DESCRIPTION OF THE DRAWINGS]

Fig. 1 is a diagram illustrating a gripped portable terminal according to all embodiments;
Fig. 2 is an example view showing gripping-pressure distributions output from a pressure sensor array arranged in the portable terminal, which is related to all the embodiments;
Fig. 3 is a diagram showing a configuration of a member information table in which member information is recorded;
Fig. 4 is a block diagram showing the structure of a gripping-feature learning authentication system according to a first embodiment;
Fig. 5 is a block diagram showing the structure of gripping-feature learning authentication systems according to a second and a third embodiments;
Fig. 6 is a block diagram showing the structure of a gripping-feature learning authentication system according to a fourth embodiment;
Fig. 7 is a block diagram showing the structure of a gripping-feature learning authentication system according to a fifth embodiment;
Fig. 8 is a flowchart showing the operation of the gripping-feature learning authentication system according to the first embodiment;

Fig. 9 is a flowchart showing the operation of the gripping-feature learning authentication systems according to the second, third, and fourth embodiments;

Fig. 10 is a flowchart showing the operation of the gripping-feature learning authentication system according to the fifth embodiment;

Fig. 11 is a sequence diagram showing the operation of the gripping-feature learning authentication systems according to the first, second, and fifth embodiments;

Fig. 12 is a sequence diagram showing the operation of the gripping-feature learning authentication system according to the third embodiment;

Fig. 13 is a sequence diagram showing the operation of the gripping-feature learning authentication system according to the fourth embodiment;

Fig. 14 is a diagram illustrating settings used in a possible case where a gripping-feature learning authentication system of the present invention is used;

Fig. 15 is a diagram illustrating possible case 1 of the use of a gripping-feature learning authentication system of the present invention;

Fig. 16 is a diagram illustrating possible case 2 of gripping-feature learning authentication system of the present invention; and

Fig. 17 is a diagram illustrating possible case 3 of gripping-feature learning authentication system of the present invention.

[DETAILED DESCRIPTION OF THE EMBODIMENTS]

Now, embodiments of the present invention will be described in detail. Components having the same functions are assigned the same numbers, and a description thereof will given just once.

Examples of a device that embodies a mobile information terminal which is one of the components of a gripping-feature learning authentication system of the present invention include portable terminals, PDAs, portable gaming machines, electronic organizers and electronic book readers. However, in addition to or in place of these devices, any other devices that meet requirements (1) through (3) given below can be used as mobile information terminals of the present invention: a device that (1) is designed to be used while being gripped and is capable of acquiring gripping-features while being used, (2) allows a timing of acquiring a gripping-feature sample to be specified, and (3) has a voice call function and/or a communication function that can be used for impersonation. In the following descriptions of embodiments, a portable terminal will be taken as a specific example and explained in detail.

First, gripping- feature samples to be acquired by portable terminals 400, 400', and 400" according to all embodiments of the present invention will be described. Since human beings are innately different in (1) the lengths of their fingers and (2) the strength of their gripping force and, as an acquired nature, (3) in the habit of gripping a portable terminal, gripping- features are extremely suitable as biometric information used for authentication. More specifically, gripping- feature authentication has almost the same level of precision as general face authentication in terms of the false  rejection rate and the false acceptance rate. Gripping- feature samples can include, for example, a gripping-pressure distribution, a gripping- shape distribution and a gripping- heat distribution. As an example method of acquiring these gripping- feature samples, when pressure sensors are distributed in an array on the portable terminals 400, 400', and 400", the gripping- pressure distribution can be acquired. In the same manner, when CCD (CMOS) sensors are distributed in an array, the gripping- shape distribution can be obtained. In the same manner, when infrared sensors are distributed in an array, the gripping- heat distribution can be obtained. When a portable terminal has operating keys at the rear surface thereof (touch sensitive panel), gripping- features can be acquired even from the pressing states (whether the operating keys or the touch sensitive panel is pressed) of the operating keys (touch sensitive panel) when the terminal is gripped. In the following descriptions of the embodiments, a gripping- pressure distribution will be used as a gripping-feature sample.

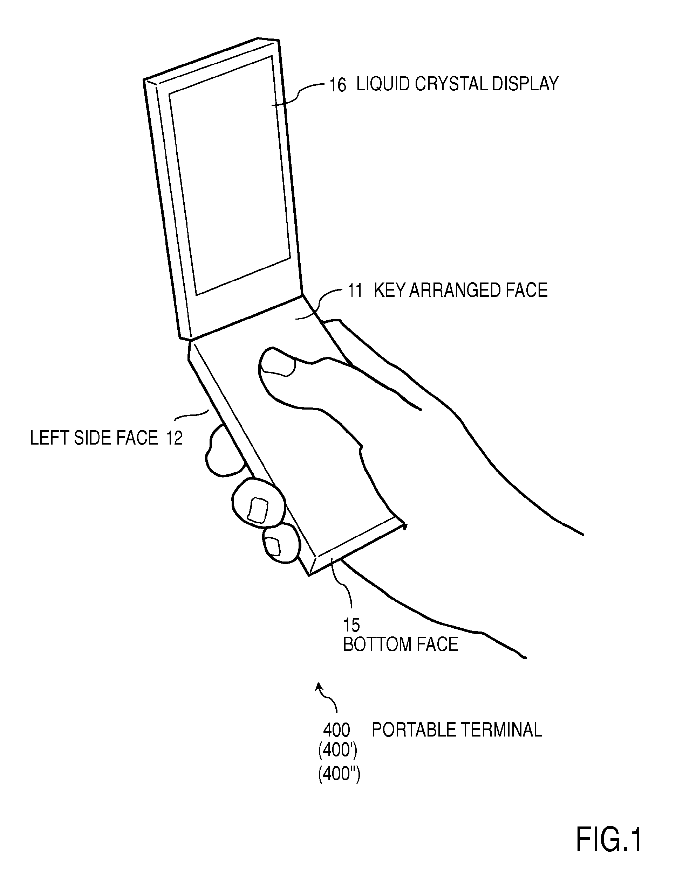

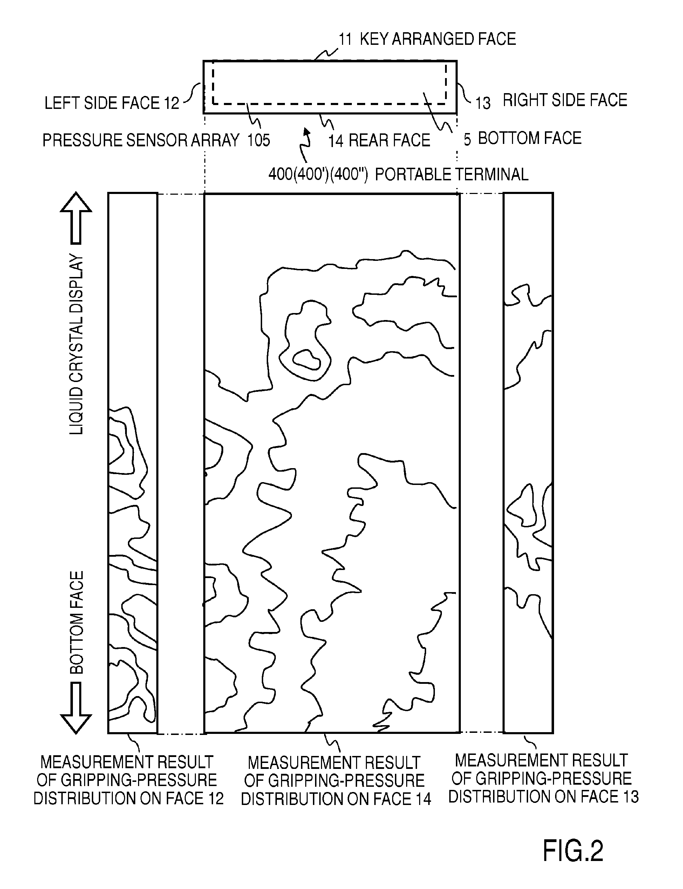

Acquisition of a gripping-feature distribution by using a pressure sensor array will be described in detail with reference to Fig. 1 and Fig. 2. Fig. 1 is an example view showing a state in which the portable terminals 400, 400', and 400" according to all the embodiments are gripped. Fig. 2 is an example view showing gripping-pressure distributions output from a pressure sensor array arranged on the surface of the portable terminals 400, 400', and 400" according to all the embodiments. It is assumed here that the portable terminals 400, 400', and 400" are general folding-type portable terminals. Two long-plate-shaped bodies are foldably coupled with a coupling shaft at short sides of the bodies. One of the bodies has operating keys. The  surface on which the operating keys are arranged is called a key arranged face 11, the side faces in the longitudinal direction at the left and right of the key arranged face 11 are called a left side face 12 and a right side face 13, the rear surface of the key arranged face 11 is called a rear face 14, and a side face of the key arranged face 11 in the width direction at the bottom (face opposite the face where the coupling shaft is placed) is called a bottom face 15. A liquid crystal display 16 is provided in the other body on a surface facing the key arranged face 11 when the terminal is folded. The portable terminals 400, 400', and 400" are configured as described above, but the foregoing description explains merely an example for describing in detail the gripping-pressure distributions output from the pressure sensor array, to be described later. Therefore, the portable terminals 400, 400', and 400" are not necessarily folding-type terminals, such as that shown in Fig. 1, and can have any types, such as a straight type or a sliding type.

Referring back to Fig. 1, it is assumed that the user of the portable terminals 400, 400', and 400" grips the portable terminals 400, 400', and 400" as shown in Fig. 1. A pressure sensor array 105 (indicated by a dotted line in Fig. 2) is arranged so as to be able to detect external gripping pressure, on the surface of the body where the key arranged face 11 of the portable terminals 400, 400', and 400" is arranged. The pressure sensor array 105 can detect the gripping-pressure distributions on the left side face 12, the right side face 13, and the rear face 14 of the portable terminals 400, 400', and 400". The signal sent from each pressure sensor of the pressure sensor array 105 can be analyzed to draw gripping-pressure distributions such as those shown in Fig. 2. It is understood from the gripping-pressure distributions shown in Fig. 2 that characteristics of the fingers and the gripping force of the user are exhibited clearly on the left side face 12, the right side face 13, and the rear face 14. The gripping-pressure distributions acquired in this way can be used as gripping-feature samples in the present invention.

The concept of a sampling trigger used on portable terminals 400, 400', and 400" according to any embodiment of the present invention will be described below. As stated above, the present invention uses gripping-feature samples. A sampling trigger is a timing at which a gripping-feature sample is acquired. According to the present invention, a user authentication template is learned from gripping-feature samples and the learned user authentication template is used to perform authentication, as will be detailed later. Since the present invention is aimed at authentication between calling and called parities and between a communicating pair (hereinafter referred to as member authentication), the member authentication needs to be performed while a voice call is being made or an emails are being exchanged. This is because the purpose of the member authentication is to determine whether the person a user is currently phoning (or exchanging emails) is really an authentic person.

Gripping- features stated above usually vary depending on the situation of use of the portable terminal. The way in which the portable terminal is gripped differs from situation to situation, for example a situation where an email is being typed, a situation where the camera function is used, and a situation where a voice call is being made. Accordingly, for example when member authentication is to be performed during a voice call, only gripping- feature samples in the gripping state in a voice call are collected to learn a user authentication template first. Then, to perform the member authentication, gripping- feature samples need to be acquired while the terminal is gripped during a voice call and the gripping- feature samples need to be compared with the user authentication template. Therefore, gripping- feature samples need to be acquired at timings that meet a certain condition in both learning and authentication. For example, when member authentication is to be performed during a voice call, the portable terminal may be monitored to determine whether the portable terminal is in a voice call and, only if the portable terminal is in a voice call, a timing of acquiring a gripping- feature sample may be generated at regular intervals (for example once a minute). When member authentication is to be performed during exchange of emails, the portable terminal may be monitored to determine whether a mailer is active or not and, only if the mailer is active, a timing may be generated in response to a depression of a particular operating key (for example an OK key). Timing of acquiring a gripping- feature sample such as "once a minute in a voice call" or "a depression of the OK key while a mailer is active" stated above is referred to as a sampling trigger. A gripping- feature sample is acquired in response to generation of a sampling trigger.

Examples of the distance serving as a determination criterion of authentication, described earlier, will be explained below. It is assumed here, for example, that a pressure value $x_{i,j}$ was acquired from the i-th sensor element in the j-th measurement performed for learning, where i = 1, 2, ..., n, j = 1, 2, ..., m, n indicates the number of sensor elements and is an integer equal to 2 or greater, and m indicates the number of gripping-feature measurements for learning and is an integer equal to 2 or greater. The average of the pressure values, the variance, and the vectors of the average and the variance are defined as follows:

[Formula 1]

$$\overline{x}_i = \frac{1}{m}(\sum_{j=1}^{m} x_{i,j})$$

$$s_i^2 = \frac{1}{m}\sum_{j=1}^{m}(\overline{x}_i - x_{i,j})^2$$

$$\mathbf{X} = (\overline{x}_1, \overline{x}_2, \cdots, \overline{x}_n); \quad S^2 = (s_1^2, s_2^2, \cdots, s_n^2)$$

The user authentication template is indicated with a subscript "le". The Mahalanobis's generalized distance $f_1$ is given by the following expression.

[Formula 2]

$$f_1 = \left[\sum_{i=1}^{n}\left(\frac{x_i - _{le}\overline{x}_i}{s_i}\right)^2\right]^{1/2}$$

As another example distance, the Euclid distance $f_2$ can be defined by the following expression.

[Formula 3]

$$f_2 = \left[\sum_{i=1}^{n}(x_i - _{le}\overline{x}_i)^2\right]^{1/2}$$

As still another example distance, the Manhattan distance $f_3$ can be defined by the following expression.

[Formula 4]

$$f_3 = \sum_{i=1}^{n}|x_i - _{le}\overline{x}_i|$$

These three distances can be used to perform determination with the following determination expression in common. Data of the user- to- be- authenticated, acquired for determination, is indicated with a subscript "self", and data of other people is indicated with a subscript "oth". When the threshold used to determine other people is defined as $x_{thre}$, the following expression can be used to determine other people.

$$x_{thre} < _{oth}f$$

It is assumed here that gripping- feature sample data of other people is available in some method, such as embedding the data in the portable terminal in advance, allowing the user to access the data on the Internet, or allowing the user to acquire the data by asking other people to grip the portable terminal. From the data of other people and the user authentication template, the distance $_{oth}f$ is calculated. The threshold $x_{thre}$ is determined to satisfy the following condition after the distance $_{self}f$ is calculated from a gripping- feature sample of the authentic user, not used for template learning and the learned template.

$$_{self}f < x_{thre} < {}_{oth}f$$

The user authentication template is obtained from the average of gripping-feature samples in the foregoing description. However, other methods can be used. For example, a pressure distribution acquired from n sensor elements is divided into appropriate areas (10 areas, for example, where n is larger than 10); the sum (or the average) of gripping pressure in each of the areas is calculated to generate vector data consisting of, as a vector element, the sum (or the average) of gripping pressure in the area; and such vector data is generated for m gripping-feature samples, and the average thereof is used as the template. Alternatively, the positions of the sensor elements having the top 20 pressure values among n sensor elements are recorded; vector data thereof is generated; and such vector data is generated for m gripping-feature samples, and the average thereof is used as the template.

Member information used by portable terminals 400, 400', and 400" according to any embodiment of the present invention will be described below. Member information is stored on a server and is a list on which terminal identification numbers of portable terminals owned by users are recorded in association with a member group to which the users belong. The concept of terminal identification number herein encompasses not only numbers that depends on terminals themselves but also any kinds of identification information that uniquely identify users' portable terminals, such as USIM (Universal Subscriber Identity Module) serial numbers, subscribers' telephone numbers, and numbers relating to contract information. The term member group as used herein refers to a group that is formed automatically based on whether or not users are close in relation to each other, or on declaration by users. The server holds a user authentication template of each of the users contained in the member information described above. Information concerning each of the users recorded in the member information is stored on the server in association with the user's authentication template.

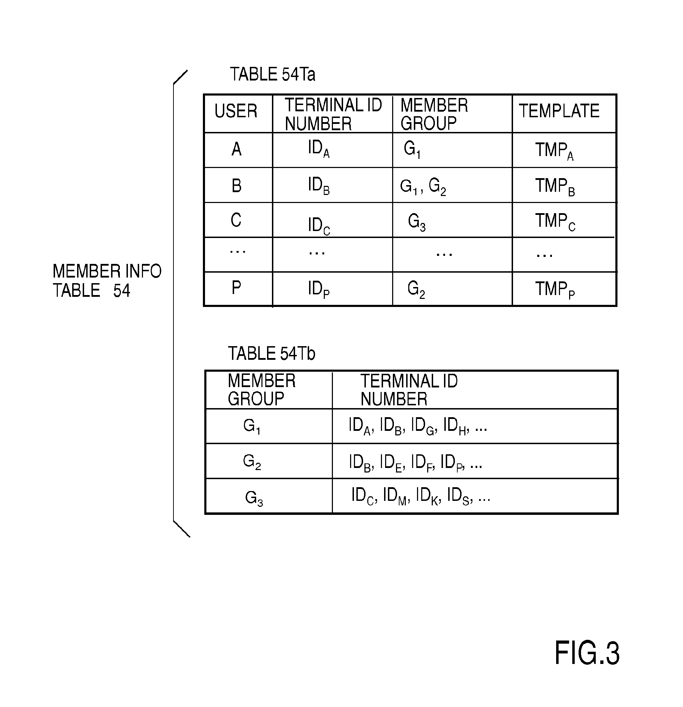

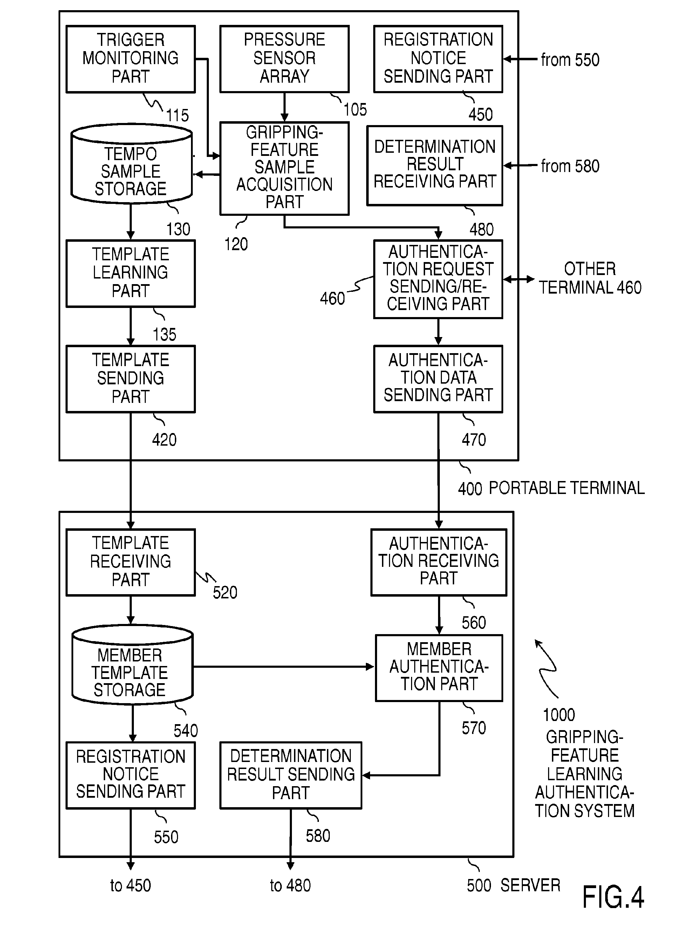

Member information is recorded as a member information table 54T in a member template storage 540 of the server 500 illustrated in Fig. 4. In this example, the member information table 54T includes table 54Ta and table 54Tb as shown in Fig. 3. Table 54Ta is a table indicating correspondences among user names, terminal identification numbers, group names, and user authentication templates. For each user A, B, C, ..., a terminal identification number $ID_A$, $ID_B$, $ID_C$, ... of a portable terminal owned by the user, a member group $G_1$, $G_2$, $G_3$, ... to which the user belongs, and a user authentication template $TMP_A$, $TMP_B$, $TMP_C$, ... are recorded in Table 54Ta in association with one another. In Table 54Tb, the member groups $G_1$, $G_2$, $G_3$, ... and the terminal identification numbers $ID_A$, $ID_B$, $ID_C$, ... of the users belonging to the member groups are recorded in association with one another.

Member information stored on the server will be described in further detail with a specific example. It is assumed here that user A and user B are in a parent-child relationship and are subscribers to a portable terminal rate plan such as a family rate plan. The server has acquired information about subscription to rate plans such as a family rate plan and a friend rate plan beforehand. Since user A and user B are family, the terminal identification numbers $ID_A$ and $ID_B$ of the portable terminals of user A and user B are recorded beforehand in Table 54Tb as belonging to the same member group $G_1$, as indicated in Table 54Tb. Then user A and user B continue using their portable terminals to generate a sampling trigger. Each time a sampling trigger is generated, the portable terminal to which the present invention is applied acquires a gripping-feature sample, the portable terminal to which the present invention is applied learns a user authentication template from the gripping-feature samples, and send the learned user authentication template to the server. The server receives the user authentication templates from user A and user B and records the user authentication template $TMP_A$ of user A in table 54Ta in association with information concerning user A, and records the user authentication template $TMP_B$ of user B in table 54Tb in association with information concerning user B.

Consider a situation where the portable terminals of user A and user B are in a voice call. If user A suspects that the other party in the call is not user B but a third party who is pretending user B, user A sends a request for authentication to the portable terminal of user B and the portable terminal of user B receives the authentication request and sends a gripping-feature sample to the server. The operations of sending the authentication request and the gripping-feature sample are concealed from the party who is phoning using the portable terminal of user B. The server acquires the terminal identification numbers $ID_A$, $ID_B$, ... of all of the users belonging to member group $G_1$ in table 54Tb to which user A belong, which can be acquired by referring to table 54Ta, reads the user authentication templates $TMP_A$, $TMP_B$, ... associated with those terminal identification numbers from table 54Ta, and compares the user authentication templates with the gripping-feature sample received from the portable terminal of user B to determine whether or not the received gripping-feature sample belongs to user B.

In this way, member information is used for member authentication in combination with the user authentication template of each user. While member information is automatically acquired by the server analyzing the rate plan such as a family rate plan or friend rate plan to which the user subscribes in the example described above, the method for acquiring member information is not limited to this. For example, member information may be created by a user declaring that another user belongs to the user's member group. A user may belong to a plurality of member groups at the same time. For example, if user B and user A are family, user B belongs to the same member group $G_1$ as user A. If user B is a friend of user P, user B belongs to the same member group $G_2$ as well. Since user A and user P are not directly related to each other, user A and user P belong to different member groups. Accordingly, user B can belong to both of member group $G_1$ to which user A belongs and member group $G_2$ to which user P belongs.

[First Embodiment]

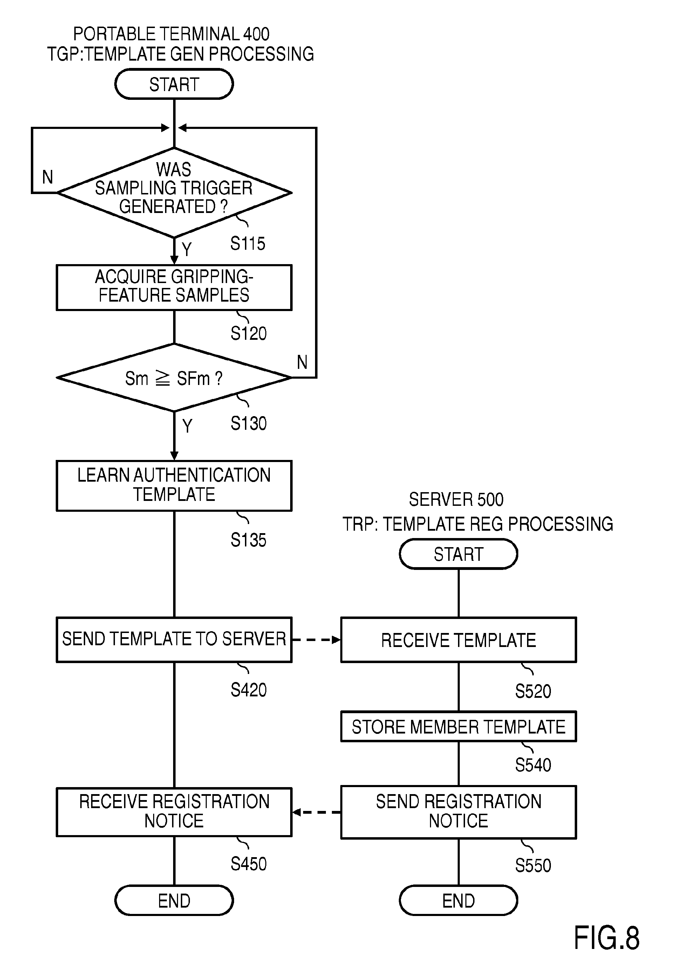

Based on the assumptions described above, a gripping-feature learning authentication system 1000 that implement member authentication according to a first embodiment will be described in detail. A learning operation of the gripping-feature learning authentication system 1000 according to the first embodiment will be described first with reference to Figs. 4 and 8. Fig. 4 is a block diagram illustrating a configuration of a gripping-feature learning authentication system 1000 according to the present embodiment. Fig. 8 is a flowchart illustrating an operation of the gripping-feature learning authentication system 1000 according to the present embodiment. Authentication template generation processing TGP performed by a portable terminal 400 is shown in steps S115, S120, S 130, S 135, S420 and S450; template registration processing TRP performed by a server 500 is shown in steps S520, S540 and S550. As illustrated in Fig. 4, the portable terminal 400 included in the gripping-feature learning authentication system according to the present embodiment includes a pressure sensor array 105, a trigger monitoring part 115, a gripping-feature sample acquisition part 120, a temporary sample storage 130, a template learning part 135, a template sending part 420, a registration notice receiving part 450, an authentication request sending/receiving part 460, an authentication data sending part 470 and a determination result receiving part 480. The server included in the gripping-feature learning authentication system 1000 of the present embodiment includes a template receiving part 520, a member template storage 540, a registration notice sending part 550, an authentication data receiving part 560, a member authentication part 570 and a determination result sending part 580. The pressure sensor array 105 of the present embodiment is arranged on a face of the portable terminal 400 as described with reference to Fig. 2.

When a sampling trigger is generated, the trigger monitoring part 115 generates a gripping-feature acquisition signal and provides the gripping-feature acquisition signal to the gripping-feature sample acquisition part 120 (Yes in S115). If the sampling trigger is not generated, the processing returns to the start (No in S115). In response to the gripping-feature acquisition signal sent from the trigger monitoring part 115, the gripping-feature sample acquisition part 120 acquires gripping-feature samples from the pressure sensor array 105 (S120). Here, the number of acquired gripping-feature samples is denoted by Sm and the number of learning-start samples is denoted by SFm. The number of learning-start samples, SFm, is a predetermined number of samples required for learning a user authentication template. It has been found that a sufficiently precise user authentication template cannot be generated if user authentication template leaning is performed with a small number of acquired gripping-feature samples. Therefore, the number of samples empirically found to be required to obtain a sufficiently precise user authentication template is set as the number of learning-start samples, SFm. Accordingly, when the number of gripping-feature samples Sm stored in the temporary sample storage 130 stored in the temporary sample storage 130 reaches the number of learning-start samples SFm ($Sm \geq SFm$) (Yes in S130), the processing proceeds to step S135, where the template learning part 135 uses the gripping-feature samples to learn a user authentication template (S135). When the number of gripping-feature samples Sm stored in the temporary sample storage 130 has not yet reached the number of learning-start samples SFm ($Sm < SFm$) (No in S130), the processing returns to the start and, upon generation of a sampling trigger, a gripping-feature sample is acquired (S 115, S120). Steps S115 and S120 are repeated (No in S130) until the number of gripping-feature samples Sm stored in the temporary sample storage 130 reaches the number of learning-start samples SFm. The user authentication template can be obtained from the average of gripping-feature samples (a gripping-pressure distribution in the present embodiment) as has been described above. Then, the template sending part 420 sends the pair of the learned user authentication template and the terminal identification number of the portable terminal to the server 500 (S420).

The server 500, on the other hand, receives the pair of the user authentication template and the terminal identification number sent from the portable terminal 400 (S520). The member template storage 540 stores the received user authentication template in association with member information as shown in the pair of tables 54Ta and 54Tb in Fig. 3 (S540). The registration notice sending part 550 sends a registration notice indicating that the user authentication template is stored in association with member information to the portable terminal 400 (S550). On the portable terminal 400, on the other hand, the registration notice receiving part 450 receives the registration notice sent from the server 500 (S450). With this operation, the learning operation for the portable terminal 400 ends. Thus the user authentication template and the member information of the user of the portable terminal 400 have been registered in the server 500.

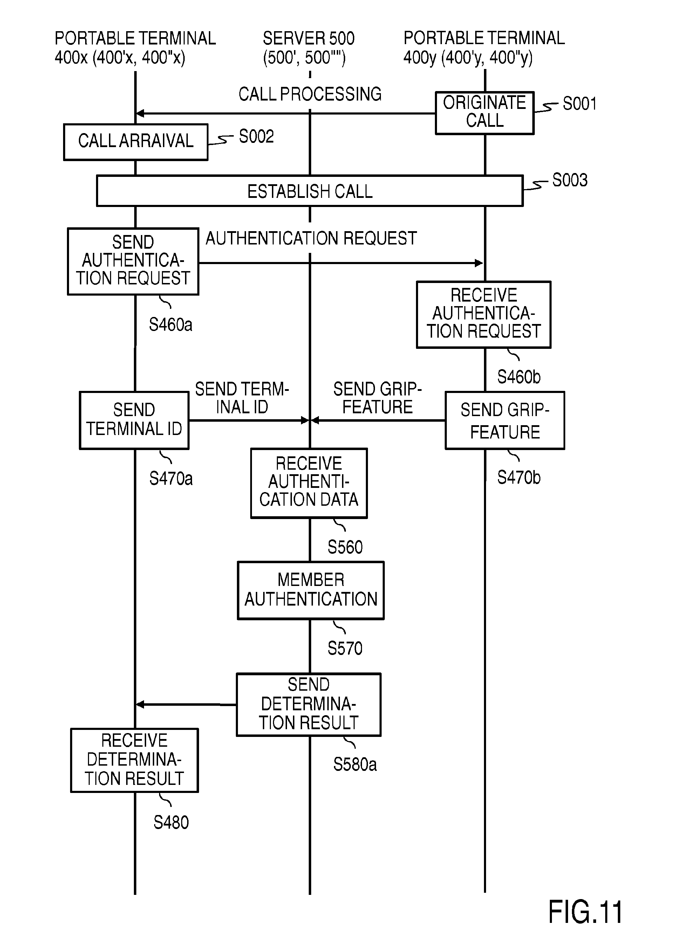

A member authentication operation of the gripping-feature learning authentication system 1000 of the present embodiment will be described next with continuing reference to Fig. 4 and additional reference to Fig. 11. Fig. 11 is a sequence diagram illustrating the operation of the gripping-feature learning authentication system 1000 according to the present embodiment. In the authentication operation, two portable terminals 400x and 400y and the server 500 operate to accomplish member authentication that determines whether or not users operating the two portable terminals 400x and 400y belong to the same member group. It is assumed here that the portable terminals 400x and 400y have the same configuration as the portable terminal 400 described above and illustrated in Fig. 4. It is also assumed that the portable terminals 400x and 400y have already received a registration notice described above through the procedure in Fig. 11 prior to the authentication operation (S450). Accordingly, the user of the portable terminal 400x and the user of the portable terminal 400y have been registered in at least one of the member groups stored in the member template storage 540 of the server 500. While a voice call is made between the portable terminals 400x and 400y in the description of Fig. 11, communication between portable terminals is not limited to this. The portable terminals 400x and 400y may exchange emails or may use a terminal-to-terminal communication service, such as chat or Twitter (registered trademark).

The portable terminal 400y first originates a voice call to the portable terminal 400x (S001). Call processing is performed by the network and the call arrives at the portable terminal 400x (S002). The user of the portable terminal 400x responds to the arrived call, the call is established (S003) and a phone conversation is started. Here, suppose that the user of the portable terminal 400x doubts whether the person on the other end of the call is truly the user of the portable terminal 400y. For example, assume that the user of the portable terminal 400x and the user of the portable terminal 400y are friends and frequently have phone conversations on the portable terminal. Suppose, however, that since the voice of the calling person sounds unusual and odd in this phone call (for example, the voice is somewhat different than usual or specifics of the conversation are odd), the user of the portable terminal 400x doubt whether the calling person is the user of the portable terminal 400y. At this point in time, the user of the portable terminal 400x operates the portable terminal 400x to activate the authentication request sending/receiving part 460 of the portable terminal 400x. The authentication request sending/receiving part 460 of the portable terminal 400x sends an authentication request to the portable terminal 400y (S460a). It is assumed here that a particular key for generating a trigger causing the authentication request sending/receiving part 460 to perform the authentication request send operation (S460a) is preset on every portable terminal 400, including the portable terminals 400x and 400y. Accordingly, the user of the portable terminal 400x can send the authentication request to the portable terminal 400y by depressing the preset particular key. Preferably, a key on a side face, for example, of the portable terminal is assigned as the preset particular key so that the user can readily depress the key during a phone conversation.

While the authentication request sending/receiving part 460 is activated in response to the depression of the particular key by the user of the portable terminal 400x in the foregoing description, the way to activate the authentication request sending/receiving part 460 is not limited to this. For example, a display element for issuing an authentication request may be displayed on the display during a voice call to allow the user to send an authentication request by selecting the display element and depressing an OK key. Alternatively, the authentication request sending/receiving part 460 of the portable terminal 400x, which is the called terminal, may automatically operate to perform step 460a upon establishment of a call or upon the lapse of a predetermined period of time after establishment of a call. In this case, a key for generating the trigger does not need to be provided on the portable terminal.

The authentication request sending/receiving part 460 of the portable terminal 400y receives the authentication request from the portable terminal 400x (S460b). Then, the authentication data sending part 470 of the portable terminal 400x sends the terminal identification number of the portable terminal 400x to the server 500 (S470a) when the authentication request sending/receiving part 460 sends the authentication request. When the authentication request sending/receiving part 460 of the portable terminal 400y receives the authentication request (S460b), the authentication data sending part 470 sends a most recently acquired gripping-feature sample to the server 500 (S470b). The authentication data sending part 470 operates differently depending on whether the authentication request sending/receiving part 460 sends or receives an authentication request, for the following reason. The user who is requesting authentication can be regarded as the authentic owner of the terminal and does not need to be authenticated. Therefore the owner of the portable terminal identified by the terminal identification number and the user requesting the authentication can be treated as one and the same person. On the other hand, the user whose authentication has been requested needs to be subjected to authentication. Therefore, authentication is need to be performed to compare the most recently acquired gripping-feature sample with the user authentication template for authentication.

The following is an operation performed by the server 500. The authentication data receiving part 560 of the server 500 receives the terminal identification number sent from the portable terminal (portable terminal 400x) that has sent the authentication request and the gripping-feature sample sent from the portable terminal (portable terminal 400y) that has received the authentication request (S560). The member authentication part 570 of the server 500 uses the terminal identification number received from the portable terminal 400x to read the corresponding member group G from Table 54Ta stored in the member template storage 540, refers to table 54Tb to compare the user authentication templates in table 54Ta that correspond to the terminal identification numbers of all of the members included in the member group G with the gripping-feature sample received from the portable terminal 400y, thereby determines the probability that the user of the portable terminal 400y belongs to the same member group (S570). In this description, the probability that the user of the portable terminal 400x and the person operating the portable terminal 400y belong to the same member group is determined. The determination result sending part 580 of the server 500 sends the result of the determination made by the member authentication part 570 to the portable terminal (portable terminal 400x) that has sent the authentication request (S580a).

Here, the probability means the highest degree of match of the gripping- feature with each of a plurality of candidate user authentication templates selected. For example, if a user authentication template is represented by a vector TMP = $(v_1, v_2, ..., v_n)$ and a gripping- feature sample acquired is represented by a vector X = $(x_1, x_2, ..., x_n)$, then the probability P (X) can be given by the following expression on the basis that the perfect match = 100%.

[Formula 5]

$$P(X) = \left(1 - \frac{|TMP - X|}{|TMP|}\right) \times 100$$

This is illustrative only and those skilled in the art can readily give various definitions. The probability P may be directly sent to the portable terminal as the determination result or the probability may be compared with a predetermined threshold before sending the result of determination as to whether the users belong to the same member group.

The determination result receiving part 480 of the portable terminal 400x receives the result of the determination made by the member authentication part 570 from the server 500 (S480). In this way, if the user of the portable terminal 400x doubts whether the person on the other end of the call is the user of the portable terminal 400y, the user of the portable terminal 400x sends an authentication request and receives the probability that the person currently operating the portable terminal 400y belongs to the same member group as the user of the portable terminal 400x as a determination result notice from the server 500. Accordingly, the user of the portable terminal 400x can determine his/her attitude to the person operating the portable terminal 400y according to the determination result received. For example, if the determination result notice received from the server 500 indicates a low probability that the person currently operating the portable terminal 400y matches any of the users belonging to the same member group as the user of the portable terminal 400x, the user of the portable terminal 400x can determine that the person operating the portable terminal 400y is a malicious third party pretending his/her friend and hung up.

[Second Embodiment]

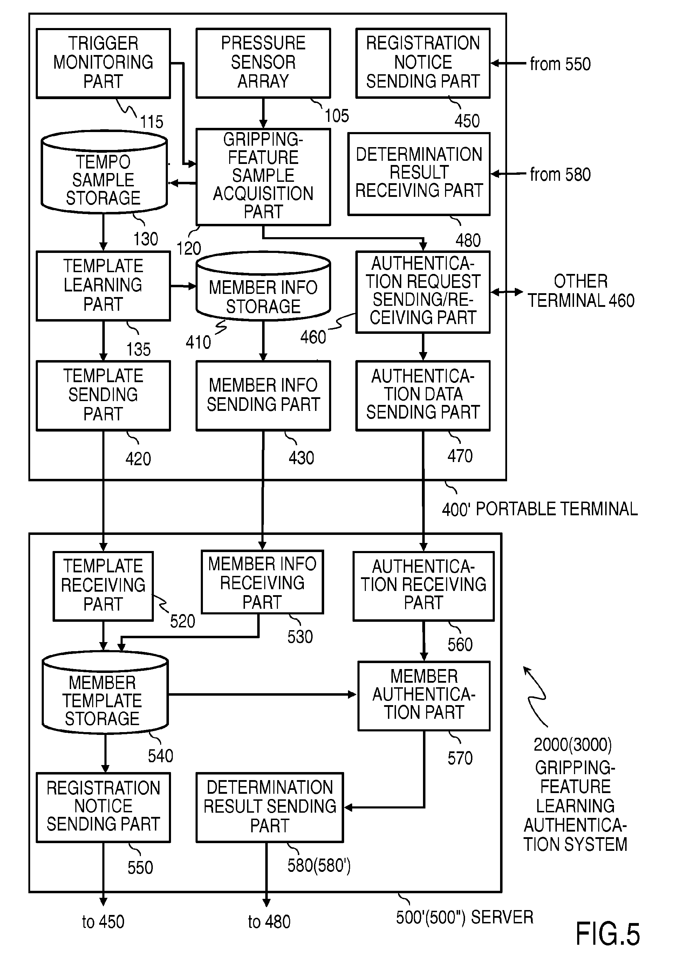

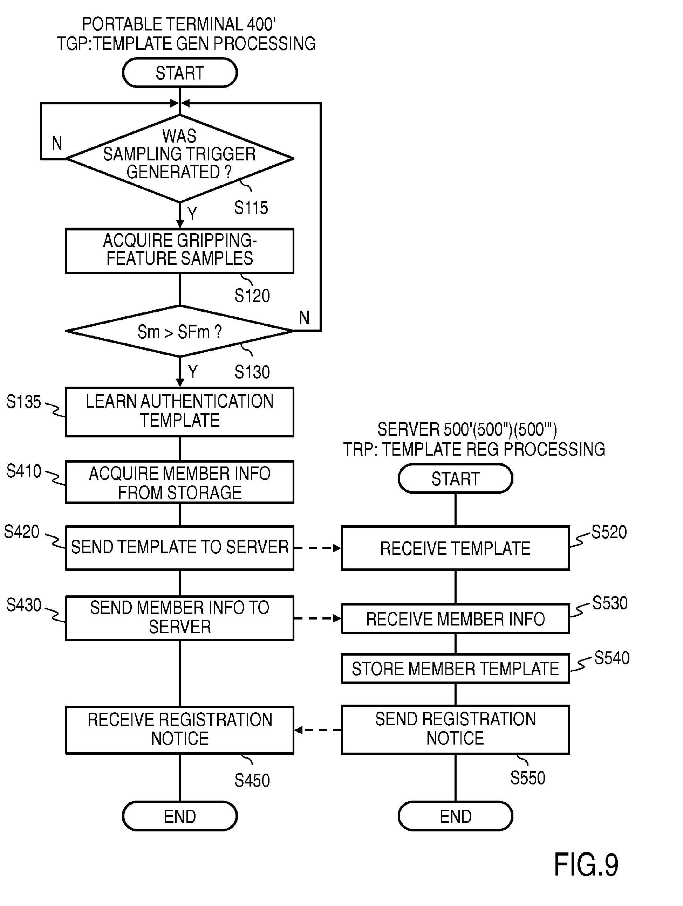

A gripping-feature learning authentication system 2000 according to a second embodiment which allows member information to be flexibly created and changed by user settings will be described below in detail. A learning operation of the gripping-feature learning authentication system 2000 according to the second embodiment will be described with reference to Figs. 5 and 9. Fig. 5 is a block diagram illustrating a configuration of the gripping-feature learning authentication system 2000 according to the present embodiment. Fig. 9 is a flowchart illustrating the operation of the gripping-feature learning authentication system 2000 according to the present embodiment. User authentication template generation processing TGP performed by a portable terminal 400' is shown in steps S115, S120, S130, S135, S410, S420, S430 and S450; template registration processing TRP performed by a server 500' is illustrated in steps S520, S530, S540 and S550. As illustrated in Fig. 5, the portable terminal 400' of the gripping-feature learning authentication system 2000 of the present embodiment is configured with a member information storage 410 and a member information sending part 430 in addition to the components of the portable terminal 400 of the first embodiment (Fig. 4). The server 500' of the present embodiment is configured with a member information receiving part 530 in addition to the components of the server 500 in Fig. 4. The components other than the member information storage 410, the member information sending part 430, and the member information receiving part 530, perform exactly the same operations as the components labeled with the same reference numerals in the first embodiment and therefore the description of those components will be omitted.

As illustrated in Fig. 9, the operation up to step S135 is the same as the operation in the first embodiment and therefore description of the operation up to step S 13 5 will be omitted. The member information storage 410 added in the present embodiment stores information (member information, for example terminal identification numbers) of users permitted by the user to belong to the same member group as the user. The user can change users whom the user permits to belong to the same member group as the user as appropriate. The member information sending part 430 acquires member information from the member information storage 410 (S410) and sends the member information to the server together with a user authentication template (S420, S430). On the server 500', on the other hand, the member information receiving part 530 receives the member information sent from the portable terminal 400' (S530). The member template storage 540 stores the received user authentication template and the received member information in association with each other (S540). The second embodiment differs from the first embodiment in that whereas the server 500 provides member information beforehand in the first embodiment, the users of portable terminals 400' each sets user IDs that the user permits to belong to the same member group as the user, sends the user IDs as member information to the server 500', and the server 500' records all of the pieces of member information collected from the users on a list and centrally manages the member information. Since each portable terminal 400' includes the member information storage 410 and the member information sending part 430 to allow the user of the portable terminal 400' to create and edit member information him/herself in this way, convenience to the user is improved. Authentication operation of the gripping-feature learning authentication system 2000 of the present embodiment is exactly the same as that of the gripping-feature learning authentication system 1000 of the first embodiment and therefore the description of the operation is omitted.

[Third Embodiment]

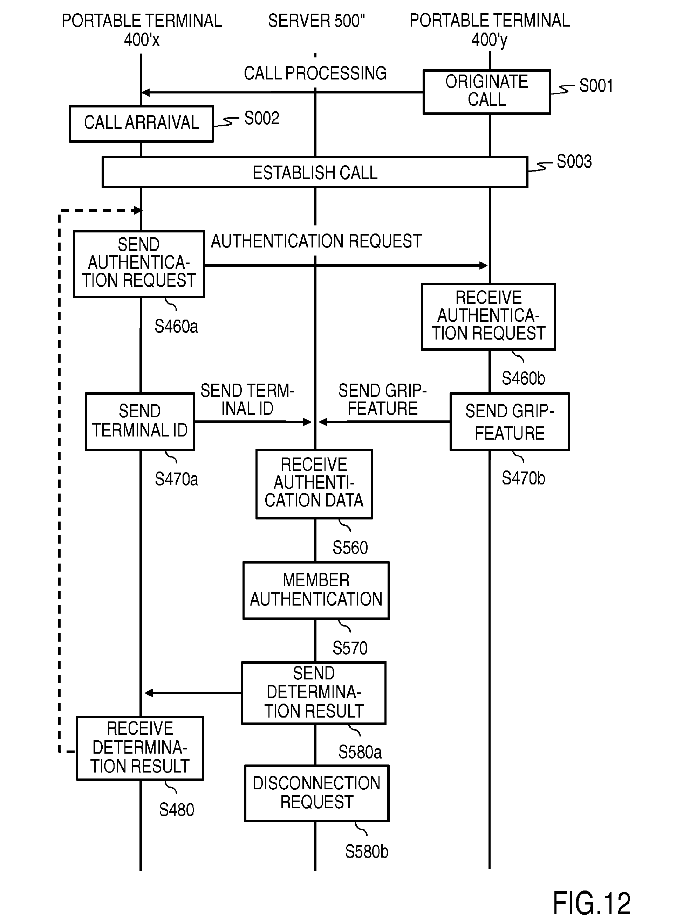

A gripping-feature learning authentication system 3000 according to a third embodiment, in which the function of the server is extended, will be  described in detail. Learning operation of the gripping-feature learning authentication system 3000 of the third embodiment is exactly the same as that of the gripping-feature learning authentication system 2000 of the second embodiment and therefore the description of the operation will be omitted. Authentication operation of the gripping-feature learning authentication system 3000 of the third embodiment will be described with continuing reference to Fig. 5 and additional reference to Fig. 12. Fig. 12 is a sequence diagram illustrating the operation of the gripping-feature learning authentication system 3000 according to the present embodiment. Portable terminals 400' included in the gripping-feature learning authentication system 3000 according to the present embodiment are the same as the portable terminals 400' in the gripping-feature learning authentication system 2000 of the second embodiment. A server 500" included in the gripping-feature learning authentication system 3000 of the present embodiment includes a template receiving part 520, a member information receiving part 530, a member template storage 540, a registration notice sending part 550, an authentication data receiving part 560, a member authentication part 570 and a determination result sending part 580'.

The present embodiment differs from the second embodiment in that whereas the server 500' of the second embodiment includes the determination result sending part 580, the server 500" of the present embodiment includes a determination result sending part 580' having a function further extended from the function of the determination result sending part 580. The components of the server 500" other than the determination result sending part 580' operate exactly the same way as the  components labeled with the same reference numerals in the second embodiment and therefore the description of the operations of those components will be omitted. Authentication operation of the gripping-feature learning authentication system 3000 according to the present embodiment differs from the second embodiment in that if the result of determination (probability) made by the member authentication part 570 is lower than or equal to a predetermined threshold, the determination result sending part 580' sends a disconnection request to the network (S580b). After the communication has been disconnected, a notice that communication has been forcedly disconnected because of the result of member authentication may be sent to the portable terminal 400'x.

Alternatively, each time the member authentication part 570 provides a bad determination result (a probability of belonging to the same member group as an authentication requesting terminal that is lower than or equal to a predetermined value), for example the determination result sending part 580' may add up the number of bad determination results as a third party point and, when the third party point exceeds a predetermined value, the determination result sending part 580' may send a disconnection request to the network (S580b) . For example, the server 500" may send the first bad determination result to the portable terminal 400'x (S580a), the portable terminal 400'x, which received the first bad determination result, may return to step S460a as indicated by a dashed line in Fig. 12 and may resend an authentication request to the portable terminal 400'y, the portable terminal 400'y may send an additional gripping- feature sample to the server 500" (S470b), the server 500", which acquired the gripping- feature sample, may  perform member authentication (S570) again and, if the third party point described above exceeds the predetermined value as a result of the addition, the determination result sending part 580' may send a disconnection request to the network (S580b) .

The security against impersonation can be further improved in this way by the determination result sending part 580' sending a disconnection request to the network if the result of determination (probability) made by the member authentication part 570 is not good, or the third party point, which is the sum of the number of times the member authentication part 570 has provided a bad determination result, exceeds a predetermined value.

[Fourth Embodiment]

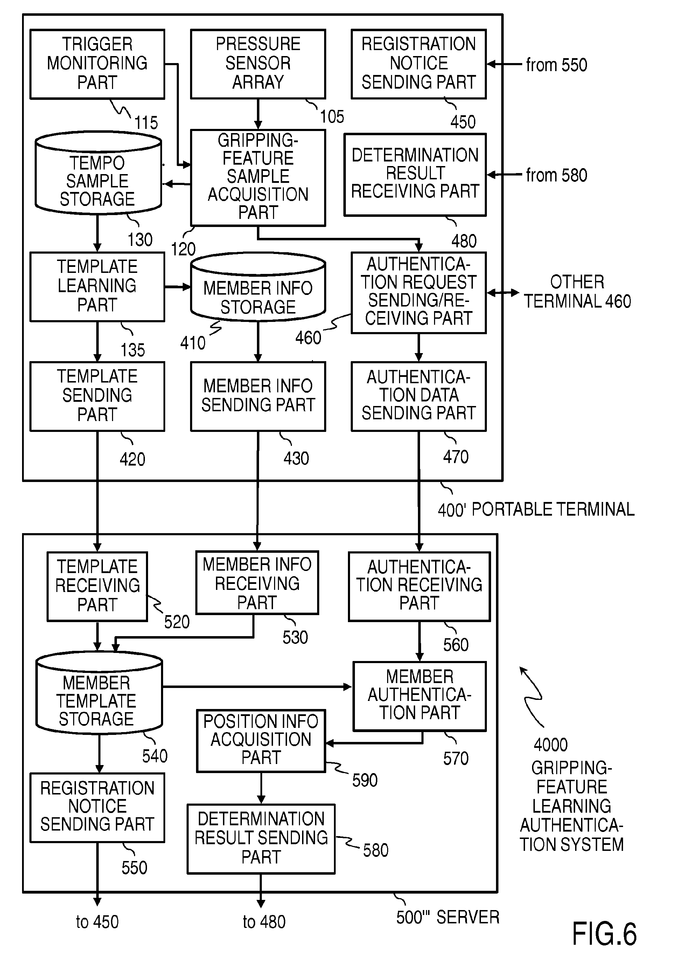

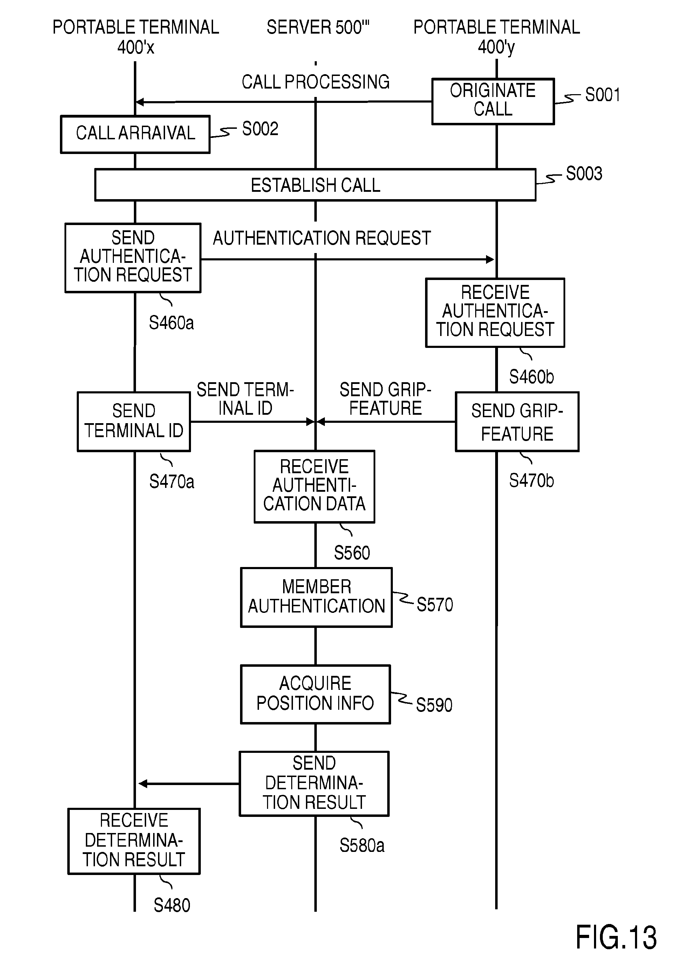

A gripping-feature learning authentication system 4000 according to a fourth embodiment 4, in which the function of the server is further extended, will be described below in detail. Learning operation of the gripping-feature learning authentication system 4000 of the present embodiment is exactly the same as that of the gripping-feature learning authentication system 2000 of the second embodiment and therefore the description of the operation will be omitted. Authentication operation of the gripping-feature learning authentication system 4000 according to the present embodiment will be described with reference to Figs. 6 and 13. Fig. 6 is a block diagram illustrating a configuration of the gripping-feature learning authentication system 4000 according to the present embodiment. Fig. 13 is a sequence diagram illustrating the operation of the gripping-feature learning authentication system 4000 according to the present embodiment. Portable terminals 400' included in the gripping-feature learning authentication system 4000 are the same as the portable terminals 400' in the gripping-feature learning authentication system 2000 of the second embodiment. A server 500'" included in the gripping-feature learning authentication system 4000 according to the present embodiment includes a position information acquisition part 590 in addition to the components of the server 500' of the second embodiment in Fig. 5. Operations of the components other than the position information acquisition part 590 are exactly the same as the operations of the components labeled with the same reference numerals in the second embodiment and therefore the description of the operations of those components will be omitted. If a certain condition is satisfied such as a result of determination (probability) made by the member authentication part 570 is not good or the third party point, which is the sum of the number of bad determination results, exceeds a predetermined value, the position information acquisition part 590 of the server 500'" acquires GPS information of the portable terminal 400'y from GPS satellites, not depicted, as position information (S590). The position information acquisition part 590 of the server 500'" may acquire base station information of the portable terminal 400'y as the position information. Then the determination result sending part 580 of the server 500'" incorporates the acquired position information into the determination result and sends the determination result with the positional information to the portable terminal 400'x (S580a). The determination result receiving part 480 of the portable terminal 400'x receives the determination result with the position information from the server 500'" (S480).

In this way, the server can provide information indicating the current position of the portable terminal that has received the authentication information to provide the position information to the user as information for determining authenticity. Furthermore, if the user determines that the person on the other end of communication is an impersonating criminal, the user can provide the position information to the police to help the police detect the criminal.

[Fifth Embodiment]

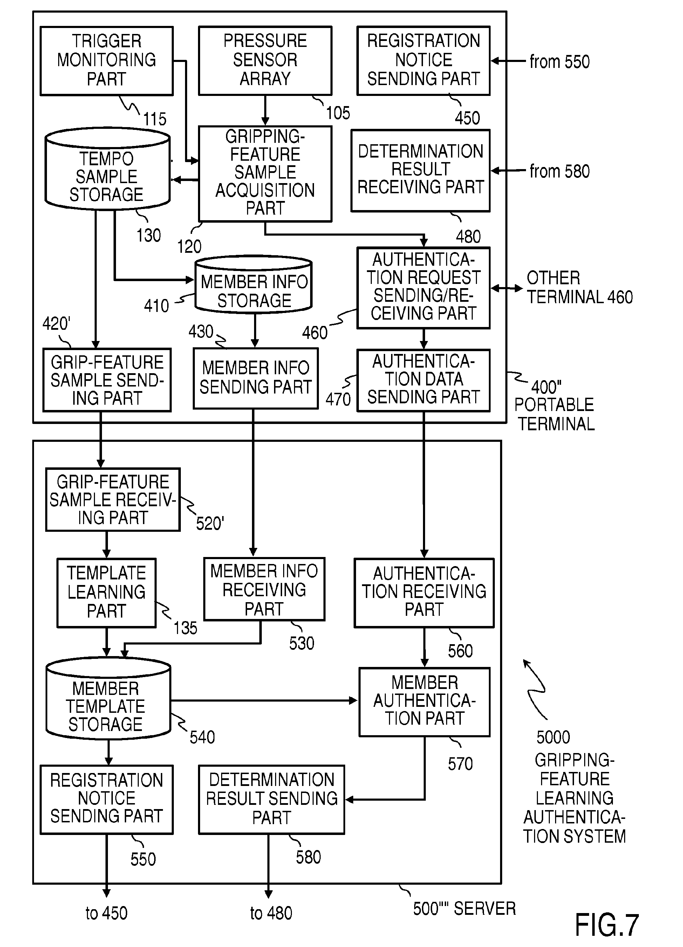

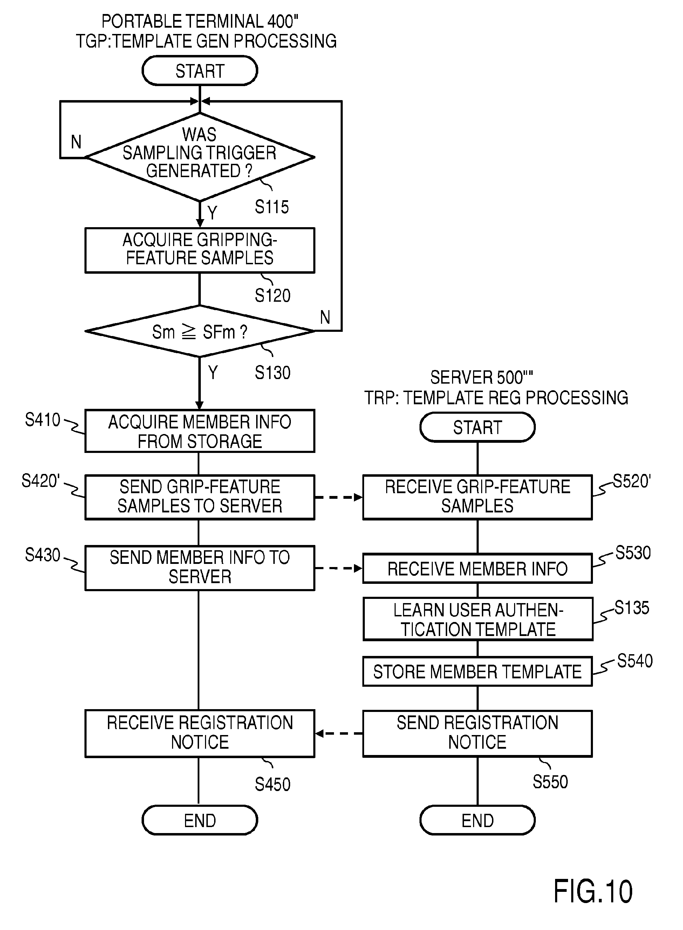

A gripping-feature learning authentication system 5000 according to a fifth embodiment in which a server performs a learning operation will be described in detail below. Authentication operation of the gripping-feature learning authentication system 5000 according to the present embodiment is exactly the same as the authentication operation of the gripping-feature learning authentication system 2000 of the second embodiment and therefore the description of the authentication operation will be omitted. Learning operation of the gripping-feature learning authentication system 5000 of the present embodiment will be described with reference to Figs. 7 and 10. Fig. 7 is a block diagram illustrating a configuration of the gripping-feature learning authentication system 5000 according to the present embodiment. Fig. 10 is a flowchart illustrating the operation of the gripping-feature learning authentication system 5000 according to the present embodiment. Authentication template generation processing TGP performed by a portable terminal 400" is illustrated in steps S115, S120, S 130, S410, S420' and S430 and template registration processing TRP performed by the server 500'" is illustrated in steps S520', S530, 5135, S540 and S550. As illustrated in Fig. 7, portable terminals 400" included in the gripping-feature learning authentication system 5000 of the present embodiment has a configuration similar to that of the portable terminals 400' in Fig. 5 except that the template learning part 135 is eliminated and the template sending part 420 is replaced with a gripping-feature sample sending part 420'. The server 500"" included in the gripping-feature learning authentication system 5000 of the present embodiment has a configuration similar to that of the server 500' in Fig. 5 except that the template receiving part 520 is replaced with a gripping-feature sample receiving part 520' and a template learning part 135 is added. Operations of the components other than these components are the same as the operations of the components labeled with the same reference numerals in the second embodiment and therefore the description of the operations of the same components will be omitted. On the portable terminal 400" of the present embodiment, when the number of gripping-feature samples, $Sm$, stored in the temporary sample storage 130 reaches the number of learning-start samples, $SFm$ (Yes in S130), the member information sending part 430 acquires member information from the member information storage 410 (S410) and sends the member information to the server together with all of those gripping-feature samples stated above (S420', S430).

The gripping-feature sample receiving part 520' of the server 500"" receives the gripping-feature samples sent from the portable terminal 400" (S520'). The member information receiving part 530 of the server 500"" receives the member information sent from the portable terminal 400" (S530). The template learning part 135 of the server 500"" uses the received gripping-feature samples to learn a user authentication template (S135). The member template storage 540 stores the learned user authentication template and the received member information in association with each other (S540).

Since the server 500"" of the present embodiment includes the template learning function, the need for the portable terminal to learn a template is eliminated and memory can be saved.

While the description of embodiments has disclosed the first embodiment, which is a basic embodiment, the second embodiment in which the member information storage 410, the member information sending part 430, and the member information receiving part 530 are added to the first embodiment, the third embodiment in which the determination result sending part 580 of the second embodiment is replaced with the determination result sending part 580' having extended functionality, the fourth embodiment in which the position information acquisition part 590 is added to the second embodiment, and the fifth embodiment in which the template learning part 135 of the portable terminals of the second embodiment is moved to the server, the combinations of the components are not limited to those described above. The functionality of the determination result sending part 580 of the first embodiment may be extended to that of the determination result sending part 580'. The position information acquisition part 590 may be added to the first embodiment. Both of the determination result sending part 580' and the position information acquisition part 590 may be added to the first embodiment. The template learning part 135 of the portable terminals of the first embodiment and the variation of the first embodiment may be moved to the server. The position information acquisition part 590 may be added to the third embodiment. The template learning part 135 of the portable terminals of the third embodiment or the variation of the third embodiment may be moved to the server. The template learning part 135 of the portable terminals of the fourth embodiment may be moved to the server.

<Possible cases>

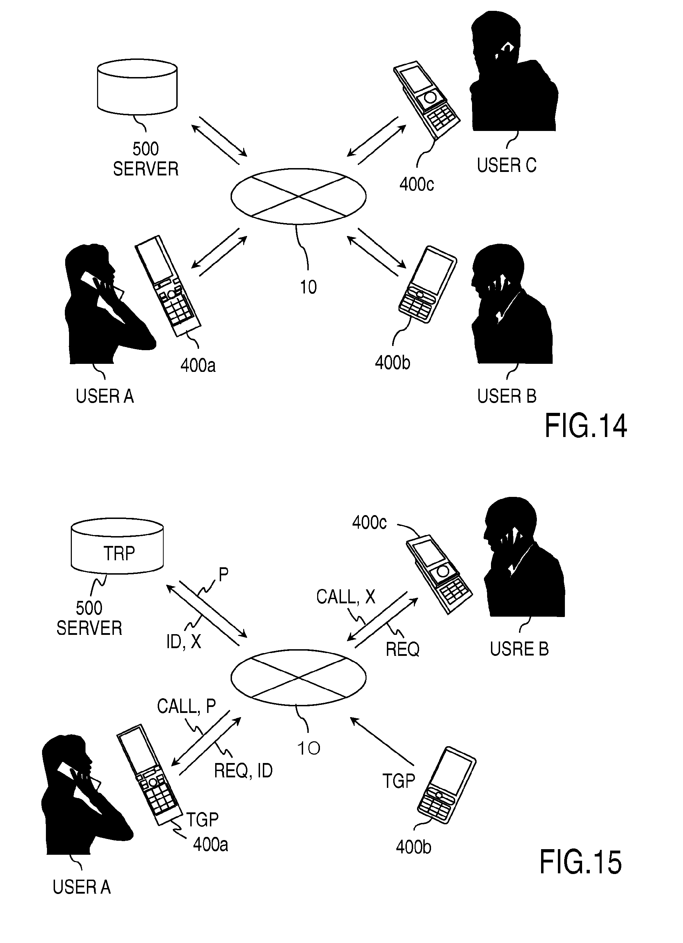

Possible cases where a gripping-feature learning authentication system of the present invention is used will be described below and patterns for achieving the object of the present invention will be described in detail. The possible cases can be implemented in a gripping-feature learning authentication system of any of the embodiments. The concept of the server 500 that appears in the description of the possible cases encompasses any of the server 500 of the first embodiment, the server 500' of the second embodiment, the server 500" of the third embodiment, the server 500'" of the fourth embodiment, and the server 500"" of the fifth embodiment, although the primes are omitted from the reference numeral. Settings used in the description of the possible cases will be described first with reference to Fig. 14. Fig. 14 is a diagram illustrating settings in the possible cases of the use of a gripping-feature learning authentication system of the present invention. It is assumed that there are three users involved (user A, user B and user C) as illustrated in Fig. 14. Users A, B and C have their own portable terminals; the portable terminal of user A is referred to as the portable terminal 400a, the portable terminal of user B is referred to as the portable terminal 400b and the portable terminal of user C is referred to as the portable terminal 400c. The portable terminals 400a, 400b and 400c may be any type of the portable terminals (400, 400' and 400'") described in the embodiments. It is assumed here that the portable terminals 400a, 400b and 400c are connected to the server 500 via a network 10 so that they can communicate with the server 500.

Possible case 1 will be described with reference to Fig. 15. Fig. 15 is a diagram illustrating possible case 1 of the use of a gripping-feature learning authentication system of the present invention. In possible case 1, user A and user B are a married couple and subscribers to a family rate plan. A user authentication template of each of user A and user B has been generated (TGP) and has been registered in member information table 54T on the server 500 (see Fig. 3) (TRP). In this possible case, the user authentication template of at least user B needs to be stored on the server 500 in association with member information. User C may or may not have been registered in the member information on the server 500. User C is a coworker of user B and is not acquainted with user A, and the phone number of the portable terminal 400c is not registered in the address book on the portable terminal 400a. The portable terminals 400a and 400b in this possible case correspond to the portable terminals 400x and 400y, respectively, in Fig. 11. It is assumed that the portable terminal 400b of user B cannot be used for making a voice call because of battery exhaustion and user B is borrowing the portable terminal 400c of user C to make a call to his wife, A (CALL).

In response to the call originated from the portable terminal 400c (S001), call processing is performed on the network 10 and the call arrives at the portable terminal 400a (S002). Upon the arrival of the call, the phone number of the portable terminal 400c is displayed on the incoming-call screen of the portable terminal 400a. However, since user A and user C are unacquainted with each other and the phone number of user C is not registered in the address book as stated above, the incoming call is a call from a phone number unknown to user A. It is assumed here that user A responds to the incoming call from the unknown phone number and the call is established (S003). Conversation between user A and user B starts and user B tells user A that he is user B.

Here, suppose that user A is suspicious about user B's story because the call is from an unknown number, doubts that the person with whom user A is having a conversation may be impersonating user B and wants to issue an authentication request to identify the person. User A sends an authentication request REQ to the portable terminal 400c by depressing a preset particular key in her portable terminal 400a (S460a) . The portable terminal 400c receives the authentication request REQ from the portable terminal 400a (S460b) . The portable terminal 400a sends its own terminal identification number ID to the server 500 (S470a) . On the other hand, the portable terminal 400c sends the most recently acquired gripping- feature sample X to the server 500 (S470b) . It is assumed that the sampling trigger described earlier has been set to be generated with a relatively high frequency, such as once a minute, and a gripping- feature sample X of user B is acquired as the most recent gripping- feature sample. The server 500 receives the terminal identification number ID from the portable terminal 400a and the gripping- feature sample X from the portable terminal 400c.

The server 500 compares each of user authentication templates associated with the users in the member group G to which the user with the received terminal identification number ID belongs with the received gripping-feature sample X to determine the probability P that user A and the user corresponding to the received gripping-feature sample X belong to the same member group G (S570). Since user A and user B in this possible case are subscribers to a family rate pla users A and B belong to the same member group. The server 500 compares the user authentication templates of all of the users belonging to the same member group as user A, including user B, with the gripping-feature sample X acquired by the portable terminal 400c from user B. Thus the result of determination (probability P) based on the comparison indicates a significantly high probability that the person who is currently having a conversation with user A is user B, who belongs to the same member group. The server 500 sends the result of the determination P to the portable terminal 400a (S580a). The portable terminal 400a receives the result of the determination from the server 500 (S480). In this way, user A can feel certain that the person making a conversation with user A is user B, her husband, even though the incoming call is from an unknown number. The gripping-feature learning authentication system of the present invention has the advantageous effect described above because the gripping-feature learning authentication system achieves authentication between people operating portable terminals, rather than authentication between portable terminals or authentication between user portable terminals.

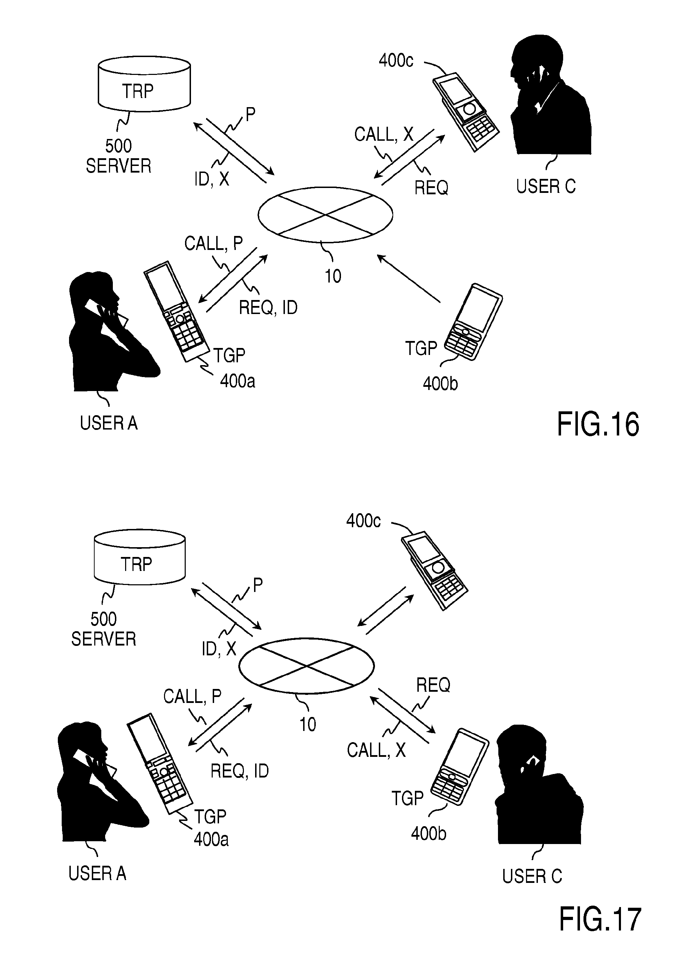

Possible case 2 will be described next with reference to Fig. 16. Fig. 16 is a diagram illustrating possible case 2 of the use of a gripping-feature learning authentication system. It is assumed in possible case 2 that user A and user B are a married couple and are subscribers to a family rate plan. A user authentication template of each of user A and user B has been generated (TGP) and has been registered in member information table 54T on the server 500 (Fig. 3) (TRP). In this possible case, the user authentication template of at least user B needs to be stored on the server 500 in association with member information. User C may or may not have been registered in the member information on the server 500. User C is a person who is impersonating user B and attempts to victimize user A. User C is acquainted with neither of user A and B and the phone number of the portable terminal 400c is not registered in the address book on the portable terminal 400a. The portable terminals 400a and 400b in this possible case correspond to the portable terminals 400'x and 400'y in Fig. 12. User C impersonates user B and makes a call to user A (CALL) from his own portable terminal 400c in attempting to make user A to send money.

In response to the call originated from the portable terminal 400c (S001), call processing is performed on the network 10 and the call arrives at the portable terminal 400a (S002). Upon the arrival of the call, the phone number of the portable terminal 400c is displayed on the incoming-call screen of the portable terminal 400a. However, since user A and user C are unacquainted with each other and the phone number of user C is not registered in the address book as stated above, the incoming call is a call from a phone number unknown to user A. It is assumed here that user A responds to the incoming call from the unknown phone number and the call is established (S003). Conversation between user A and user C starts and user C impersonates user B to victimize user A.

Here, suppose that user A is suspicious about user B's story because the call is from an unknown number, doubts that the person with whom user A is having a conversation may be impersonating user B, and wants to issue an authentication request to identify the person. User A sends an authentication request REQ to the portable terminal 400c by depressing a preset particular key on her portable terminal 400a (S460a) . The portable terminal 400c receives the authentication request REQ from the portable terminal 400a (S460b) . The portable terminal 400a sends its own terminal identification number ID to the server 500 (S470a) . On the other hand, the portable terminal 400c sends the most recently acquired gripping- feature sample X to the server 500 (S470b) . It is assumed that the sampling trigger described earlier has been set to be generated with a relatively high frequency and the gripping- feature sample X of user C is acquired as the most recent gripping- feature sample.

The server 500 receives the terminal identification number ID from the portable terminal 400a and the gripping-feature sample X from the portable terminal 400c (S560). The server 500 compares user authentication templates of the users in the member group G corresponding to the terminal identification number received from the portable terminal 400a with the gripping-feature sample X received from the portable terminal 400c to determine the probability P that user A and the user corresponding to the received gripping-feature sample X belong to the same member group (S570). Since user A and user B in this possible case are subscribers to a family rate pla users A and B belong to the same member group. The server 500 compares the user authentication templates of all of the users belonging to the same member group as user A with the gripping-feature sample acquired from user C. Thus the result of determination based on the comparison indicates a significantly low probability that the person who is currently having a conversation with user A is user B, who belongs to the same member group. The server 500 sends the result of determination to the portable terminal 400a (S580a). The portable terminal 400a receives the result of the determination from the server 500 (S480). If this possible case is applied to the gripping-feature learning authentication system 3000 of the third embodiment, the operation of sending a disconnection request from the server 500 to the network 10 (S580b) is added (Fig. 12). In this way, user A can be assured that the person making a conversation with user A is not user B, if the incoming call is from an unknown number and the person making the conversation is impersonating her husband. The gripping-feature learning authentication system of the present invention has the advantageous effect described above because the gripping-feature learning authentication system achieves authentication between people operating portable terminals.

Possible case 3 will be described next with reference to Fig. 17. Fig. 17 is a diagram illustrating possible case 3 of the use in a gripping-feature learning authentication system. It is assumed in possible case 3 that user A and user B are a married couple and are subscribers to a family rate plan. A user authentication template of each of use A and user B have been generated (TGP) and has been registered in member information on the server 500 (TRP). In this possible case, the template of at least user B needs to be stored on the server 500 in association with member information. User C may or may not have been registered in the member information on the server 500. User C in this possible case is a person who is impersonating user B and attempts to victimize user A. The portable terminals 400a and 400b in this possible case correspond to the portable terminals 400'x and 400'y in Fig. 12. It is assumed that user B has lost his portable terminal 400b and user C has picked up the lost portable terminal 400b of user B by chance. User C impersonates user B and makes a call to user A (CALL) from the portable terminal 400b of user B in attempting to make user A to send money.

In response to the call originated from the portable terminal 400b (S001), call processing is performed on the network 10 and the call arrives at the portable terminal 400a (S002). Upon the arrival of the call, the phone number of the portable terminal 400b is displayed on the incoming-call screen of the portable terminal 400a. Since user A and user B are a married couple as stated above, user A believes that the call is from his husband, user B, of course. It is assumed here that user A responds to the incoming call and the call is established (S003). Conversation between user A and user C starts. Suppose, however, that since the voice of the person currently having the conversation with user A sounds somewhat unusual, user A doubts that the person with whom user A is having a conversation may be impersonating user B, and wants to issue an authentication request to identify the person. User A sends an authentication request REQ to the portable terminal 400b by depressing a preset particular key on her portable terminal 400a (S460a). The portable terminal 400b receives the authentication request REQ from the portable terminal 400a (S460b). The portable terminal 400a sends its own terminal identification number ID to the server 500 (S470a). On the other hand, the portable terminal 400b sends the most recently acquired gripping-feature sample X to the server 500 (S470b). It is assumed that the sampling trigger described earlier has been set to be generated with a relatively high frequency and the gripping-feature sample X of user C is acquired as the most recent gripping-feature sample.

The server 500 receives the terminal identification number ID from the portable terminal 400a and the gripping-feature sample X from the portable terminal 400b (S560). The server 500 compares user authentication templates of all of the users in the member group G corresponding to the terminal identification number ID received from the portable terminal 400a with the gripping-feature sample X received from the portable terminal 400b to determine the probability P that user A and the user corresponding to the received gripping-feature sample X belong to the same member group G (S570). Since user A and user B in this possible case are subscribers to a family rate plan, they belong to the same member group G. If user C does not belong to the same member group G as user A, the result of the determination (probability P) based on the comparison with the gripping-feature sample X acquired from user C indicates a significantly low probability that the person who is currently having a conversation with user A belong to the same member group G, and the person is unlikely to be user B. The server 500 sends the result P of the determination to the portable terminal 400a (S580a). The portable terminal 400a receives the result of the determination from the server 500 (S480). If this possible case is applied to the gripping-feature learning authentication system 3000 of the third embodiment, the operation of sending a disconnection request from the server 500 to the network 10 (S580b) is added. In this way, user A can be assured that the person making a conversation with user A is not user B, even though the incoming call is from the portable terminal 400b owned by user B and the person making the conversation is impersonating user B, her husband. The gripping-feature learning authentication system of the present invention has the advantageous effect described above because the gripping-feature learning authentication system achieves authentication between people operating portable terminals.

<End of possible cases>

Each type of processing described above may be executed not only time sequentially according to the order in the description but also in parallel or individually when necessary or according to the processing capability of each apparatus that executes the processing. Appropriate changes can be made to the present invention without departing from the scope of the present invention.

When the configurations described above are implemented by a computer, the processing details of the functions that should be provided by each apparatus are described in a program. When the program is executed by the computer, the processing functions are implemented on the computer.

The program containing the processing details can be recorded in a computer-readable recording medium. The computer-readable recording medium can be any type of medium, such as a magnetic recording device, an optical disc, a magneto-optical recording medium, or a semiconductor memory.

The program is distributed by selling, transferring, or lending a portable recording medium, such as a DVD or a CD-ROM, with the program recorded on it, for example. The program may also be distributed by storing the program in a storage unit of a server computer and transferring the program from the server computer to another computer through a network.

A computer that executes this type of program first stores the program recorded on a portable recording medium or the program transferred from the server computer in its storage unit. Then, the computer reads the program stored in its storage unit and executes processing in accordance with the read program. In a different program execution form, the computer may read the program directly from the portable recording medium and execute processing in accordance with the program, or the computer may execute processing in accordance with the program each time the computer receives the program transferred from the server computer. Alternatively, the above-described processing may be executed by a so-called application service provider (ASP) service, in which the processing functions are implemented just by giving program execution instructions and obtaining the results without transferring the program from the server computer to the computer. The program of this form includes information that is provided for use in processing by the computer and is treated correspondingly as a program (something that is not a direct instruction to the computer but is data or the like that has characteristics that determine the processing executed by the computer).

In the description given above, each apparatus is implemented by executing the predetermined program on the computer, but at least a part of the processing may be implemented by hardware.

**Claims**

1. A gripping-feature learning authentication system comprising:

a mobile information terminal configured to acquire a gripping-feature sample when the mobile information terminal is gripped and learn a user authentication template; and
a server configured to perform member authentication using the user authentication template;
wherein the mobile information terminal comprises:

a trigger monitoring part configured to output a gripping-feature acquisition signal when a sampling trigger is generated;
a gripping-feature sample acquisition part configured to acquire the gripping-feature acquisition signal to acquire the gripping-feature sample;
a template learning part configured to learn the user authentication template by using the gripping-feature sample;
a template sending part configured to pair the learned user authentication template and a terminal identification number of the mobile information terminal and send the pair to the server;
an authentication request sending/receiving part configured to send and receive an authentication request;
an authentication data sending part configured to send the terminal identification number of the mobile information terminal to the server when the authentication request sending/receiving part sends an authentication request and to send an acquired gripping-feature sample to the server when the authentication request sending/receiving part receives an authentication request; and
a determination result receiving part configured to receive a result of determination made by a member authentication part from the server; and

the server comprises:

a template receiving part configured to receive a pair of a user authentication template and a terminal identification number sent from the mobile information terminal;
a member template storage configured to store the received user authentication template and member information representing a member group to which a user of the mobile information terminal belongs in association with each other;

an authentication data receiving part configured to receive a terminal identification number sent from a mobile information terminal that has sent the authentication request and a gripping-feature sample sent from a mobile information terminal that has received the authentication request;

a member authentication part configured to compare a user authentication template of each of users belonging to a member group indicated in the member information corresponding to a terminal identification number received by the authentication data receiving part with the received gripping-feature sample to determine the probability that the user corresponding to the terminal identification number received by the authentication data receiving part and the user corresponding to the received gripping-feature sample belong to the same member group; and

a determination result sending part configured to send a result of the determination made by the member authentication part to the mobile information terminal that has sent the authentication request.

2. A gripping-feature learning authentication system comprising:

a mobile information terminal configured to acquire a gripping-feature sample when the mobile information terminal is gripped; and

a server configured to learn a user authentication template and perform member authentication by using the learned user authentication template;

wherein the mobile information terminal comprises:

a trigger monitoring part configured to output a gripping-feature acquisition signal when a sampling trigger is generated;

a gripping-feature sample acquisition part configured to acquire the gripping-feature acquisition signal to acquire the gripping-feature sample;

a gripping-feature sample sending part configured to pair the acquired gripping-feature sample and a terminal identification number of the mobile information terminal and send the pair to the server;

an authentication request sending/receiving part configured to send and receive an authentication request;

an authentication data sending part configured to send the terminal identification number of the mobile information terminal to the server when the authentication request sending/receiving part sends an authentication request and to send an acquired gripping-feature sample to the server when the authentication request sending/receiving part receives an authentication request; and

a determination result receiving part configured to receive a result of determination made by a member authentication part from the server; and

the server comprises:

a gripping-feature sample receiving part configured to receive a pair of a gripping-feature sample and a terminal identification number sent from the mobile information terminal;

a template learning part configured to learn the user authentication template by using the gripping-feature sample;

a member template storage configured to store the learned user authentication template and member information representing a member group to which a user of the mobile information terminal belongs in association with each other;

an authentication data receiving part configured to receive a terminal identification number sent from a mobile information terminal that has sent the authentication request and a gripping-feature sample sent from a mobile information terminal that has received the authentication request;

a member authentication part configured to compare a user authentication template of a user belonging to a member group indicated in the member information corresponding to a terminal identification number received by the authentication data receiving part with the received gripping-feature sample to determine the probability that the user corresponding to the terminal identification number received by the authentication data receiving part and the user corresponding to the received gripping-feature sample belong to the same member group; and

a determination result sending part configured to send a result of the determination made by the member authentication part to the mobile information terminal that has sent the authentication request.

3. The gripping-feature learning authentication system according to Claim 1 or 2,
wherein the mobile information terminal further includes a member information sending part configured to send the member information to the server;

the server further comprises a member information receiving part configured to receive member information sent from the mobile information terminal; and

the member template storage stores the user authentication template and the received member information in association with each other.

4.  The gripping-feature learning authentication system according to any one of Claims 1 to 3,
    wherein the determination result sending part sends a disconnection request to a network when a result of the determination made by the member authentication part is lower than or equal to a predetermined threshold.

5.  The gripping-feature learning authentication system according to any one of Claims 1 to 3,
    wherein the determination result sending part adds up the number of times a result of determination made by the member authentication part satisfies a predetermined condition to calculate a third party point and, when the third party point exceeds a certain value, sends a disconnection request to the network.

6.  The gripping-feature learning authentication system according to any one of Claims 1 to 5, further comprising a position information acquisition part configured to acquire position information of a mobile information terminal that has received the authentication request,
    wherein the determination result sending part sends the position information together with a result of determination made by the member authentication part to a mobile information terminal that has sent the authentication request.

7.  A gripping-feature learning authentication method using a mobile information terminal that acquires a gripping-feature sample when the mobile information terminal is gripped and learns a user authentication template and a server that performs member authentication by using the user authentication template,
    the method comprising:

    a trigger monitoring step of outputting, by the mobile information terminal, a gripping-feature acquisition signal when a sampling trigger is generated;

    a gripping-feature sample acquisition step of acquiring, by the mobile information terminal, the gripping-feature acquisition signal to acquire the gripping-feature sample;

    a template learning step of learning, by the mobile information terminal, the user authentication template by using the gripping-feature sample;

    a template sending step of pairing , by the mobile information terminal, the learned user authentication template and a terminal identification number of the mobile information terminal and sending the pair to the server;

    a template receiving step of receiving, by the server, the pair of the user authentication template and the terminal identification number sent at the template sending step;

    a member template storage step of storing, by the server, the received user authentication template and member information representing a member group to which a user of the mobile information terminal belongs in association with each other;

    an authentication request sending and receiving step of sending and receiving, by the mobile information terminal, an authentication request;

    an authentication data sending step of sending, by the mobile information terminal, the terminal identification number of the mobile information terminal to the server when the mobile information terminal sends an authentication request and sending, by the mobile information terminal, an acquired gripping-feature sample to the server when the mobile information terminal receives an authentication request;

    an authentication data receiving step of receiving, by the server, a terminal identification number sent from a mobile information terminal that has sent the authentication request and a gripping-feature sample sent from a mobile information terminal that has received the authentication request;

    a member authentication step of comparing, by the server, a user authentication template of each of users belonging to a member group indicated in the member information corresponding to the terminal identification number received at the authentication data receiving step with the received gripping-feature sample to determine the probability that the user corresponding to the terminal identification number received at the authentication data receiving step and the user corresponding to the received gripping-feature sample belong to the same member group;

    a determination result sending step of sending, by the server, a  result of the determination at the member authentication step to the mobile information terminal that has sent the authentication request; and

    a determination result receiving step of receiving, by the mobile information terminal, the result of the determination made at the member authentication step from the server.

8. A gripping-feature learning authentication method using a mobile information terminal that acquires a gripping-feature sample when the mobile information terminal is gripped and a server that learns a user authentication template and performs member authentication by using the learned user authentication template;
the method comprising:

a trigger monitoring step of outputting, by the mobile information terminal, a gripping-feature acquisition signal when a sampling trigger is generated;

a gripping-feature sample acquisition step of acquiring, by the mobile information terminal, the gripping-feature acquisition signal to acquire the gripping-feature sample;

a gripping-feature sample sending step of pairing, by the mobile information terminal, the acquired gripping-feature sample and a terminal identification number of the mobile information terminal and sending the pair to the server;

a gripping-feature sample receiving step of receiving, by the server, the pair of the gripping-feature sample and the terminal identification number sent at the gripping-feature sample sending step;

a template learning step of learning, by the server, the user authentication template by using the received gripping-feature sample;

a member template storage step of storing, by the server, the learned user authentication template and member information representing a member group to which a user of the mobile information terminal belongs in association with each other;

an authentication request sending and receiving step of sending and receiving an authentication request by the mobile information terminal;

an authentication data sending step of sending, by the mobile information terminal, the terminal identification number of the mobile information terminal to the server when the mobile information terminal sends an authentication request and sending, by the mobile information terminal, an acquired gripping-feature sample to the server when the mobile information terminal receives an authentication request;

an authentication data receiving step of receiving, by the server, a terminal identification number sent from a mobile information terminal that has sent the authentication request and a gripping-feature sample sent from a mobile information terminal that has received the authentication request;

a member authentication step of comparing, by the server, a user authentication template of each of users belonging to a member group indicated in the member information corresponding to the terminal identification number received at the authentication data receiving step with the received gripping-feature sample to determine the probability that the user corresponding to the terminal identification number received at the authentication data receiving step and the user corresponding to the received gripping-feature sample belong to the same member group;

a determination result sending step of sending, by the server, a result of the determination at the member authentication step to a mobile information terminal that has sent the authentication request; and

a determination result receiving step of receiving, by the mobile information terminal, the result of the determination at a member authentication step from the server.

9. The gripping-feature learning authentication method according to Claim 7 or 8, further comprising:

a member information sending step of sending, by the mobile information terminal, member information to the server, and

a member information receiving step of receiving, by the server, member information sent from the mobile information terminal;

wherein the member template storing step stores the user authentication template and the received member information in association with each other.

10. The gripping-feature learning authentication method according to any one of Claims 7 to 9,
wherein if a result of the determination at the member authentication step is lower than or equal to a predetermined threshold, the determination result sending step sends a disconnection request to the network.

11. The gripping-feature learning authentication method according to any one of Claims 7 to 9,
wherein the determination result sending step adds up the number of times a result of determination made at the member authentication step satisfies a predetermined condition to calculate a third party point and, when the third party point exceeds a certain value, sends a disconnection request to the network.

12. The gripping-feature learning authentication method according to any one of Claims 7 to 11, further comprising a position information acquisition step of acquiring position information of a mobile information terminal that has received the authentication request,

wherein the determination result sending step sends the position information together with a result of determination made at the member authentication step to a mobile information terminal that has sent the authentication request.

13. A computer-readable recording medium having recorded thereon a computer program providing an instruction to a computer to cause the computer to execute the gripping-feature learning authentication method according to any one of Claims 7 to 12.

16 LIQUID CRYSTAL DISPLAY

11 KEY ARRANGED FACE

LEFT SIDE FACE 12

15
BOTTOM FACE

400 PORTABLE TERMINAL
(400')
(400")

FIG.1

EP 2 645 285 A1

11 KEY ARRANGED FACE

LEFT SIDE FACE 12

13 RIGHT SIDE FACE

PRESSURE SENSOR ARRAY 105

14 REAR FACE

5 BOTTOM FACE

400(400')(400'') PORTABLE TERMINAL

LIQUID CRYSTAL DISPLAY

BOTTOM FACE

MEASUREMENT RESULT OF GRIPPING-PRESSURE DISTRIBUTION ON FACE 12

MEASUREMENT RESULT OF GRIPPING-PRESSURE DISTRIBUTION ON FACE 14

MEASUREMENT RESULT OF GRIPPING-PRESSURE DISTRIBUTION ON FACE 13

FIG.2

TABLE 54Ta

| USER | TERMINAL ID NUMBER | MEMBER GROUP | TEMPLATE |
|------|-------------------|--------------|----------|
| A | $ID_A$ | $G_1$ | $TMP_A$ |
| B | $ID_B$ | $G_1, G_2$ | $TMP_B$ |
| C | $ID_C$ | $G_3$ | $TMP_C$ |
| ... | ... | ... | ... |
| P | $ID_P$ | $G_2$ | $TMP_P$ |

MEMBER INFO TABLE 54

TABLE 54Tb

| MEMBER GROUP | TERMINAL ID NUMBER |
|--------------|-------------------|
| $G_1$ | $ID_A, ID_B, ID_G, ID_H, ...$ |
| $G_2$ | $ID_B, ID_E, ID_F, ID_P, ...$ |
| $G_3$ | $ID_C, ID_M, ID_K, ID_S, ...$ |

FIG.3

TRIGGER MONITORING PART
115
TEMPO SAMPLE STORAGE
130
TEMPLATE LEARNING PART
135
TEMPLATE SENDING PART
420

PRESSURE SENSOR ARRAY
105
GRIPPING-FEATURE SAMPLE ACQUISITION PART
120

REGISTRATION NOTICE SENDING PART
450
from 550

DETERMINATION RESULT RECEIVING PART
480
from 580

AUTHENTICA-TION REQUEST SENDING/RE-CEIVING PART
460
OTHER TERMINAL 460

AUTHENTICA-TION DATA SENDING PART
470

400 PORTABLE TERMINAL

TEMPLATE RECEIVING PART
520
MEMBER TEMPLATE STORAGE
540
REGISTRATION NOTICE SENDING PART
550
to 450

DETERMINATION RESULT SENDING PART
580
to 480

AUTHENTICA-TION RECEIVING PART
560
MEMBER AUTHENTICA-TION PART
570

1000 GRIPPING-FEATURE LEARNING AUTHENTICA-TION SYSTEM

500 SERVER

FIG.4

24

FIG.5

FIG.6

FIG.7

PORTABLE TERMINAL 400
TGP:TEMPLATE GEN PROCESSING

START

WAS SAMPLING TRIGGER GENERATED ?  N

S115

Y

ACQUIRE GRIPPING-FEATURE SAMPLES

S120

$Sm \geqq SFm$ ?  N

S130

Y

LEARN AUTHENTICATION TEMPLATE

S135

SEND TEMPLATE TO SERVER

S420

RECEIVE REGISTRATION NOTICE

S450

END

SERVER 500
TRP: TEMPLATE REG PROCESSING

START

RECEIVE TEMPLATE

S520

STORE MEMBER TEMPLATE

S540

SEND REGISTRATION NOTICE

S550

END

FIG.8

28

PORTABLE TERMINAL 400'
TGP:TEMPLATE GEN PROCESSING

START

WAS SAMPLING TRIGGER GENERATED ?    N

S115

Y

ACQUIRE GRIPPING-FEATURE SAMPLES

S120

$Sm > SFm$ ?    N

Y    S130

S135 — LEARN AUTHENTICATION TEMPLATE

S410 — ACQUIRE MEMBER INFO FROM STORAGE

S420 — SEND TEMPLATE TO SERVER

S430 — SEND MEMBER INFO TO SERVER

RECEIVE REGISTRATION NOTICE

S450

END

SERVER 500'(500")(500''')
TRP: TEMPLATE REG PROCESSING

START

RECEIVE TEMPLATE    S520

RECEIVE MEMBER INFO    S530

STORE MEMBER TEMPLATE    S540

SEND REGISTRATION NOTICE

S550

END

FIG.9

PORTABLE TERMINAL 400"
TGP:TEMPLATE GEN PROCESSING

```
                    ┌──────────┐
                    │  START   │
                    └──────────┘
                         │
        ┌────────────────┤
        │                ▼
        │         ╱──────────────╲
        │  N     ╱      WAS        ╲
        ◄───────◀  SAMPLING TRIGGER ▶
        │        ╲   GENERATED ?   ╱
        │         ╲──────────────╱
        │                │  Y        S115
        │                ▼
        │      ┌────────────────────┐
        │      │  ACQUIRE GRIPPING- │
        │      │  FEATURE SAMPLES   │
        │      └────────────────────┘
        │                │        S120
        │                ▼
        │      ╱──────────────────╲   N
        └──────◀     Sm ≧ SFm ?    ▶───
               ╲──────────────────╱
                        │  Y      S130
                        ▼
```

$Sm \geqq SFm$ ?

SERVER 500""
TRP: TEMPLATE REG PROCESSING

S410 — ACQUIRE MEMBER INFO FROM STORAGE

START

S420' — SEND GRIP-FEATURE SAMPLES TO SERVER - - → RECEIVE GRIP-FEATURE SAMPLES — S520'

S430 — SEND MEMBER INFO TO SERVER - - → RECEIVE MEMBER INFO — S530

LEARN USER AUTHEN-TICATION TEMPLATE — S135

STORE MEMBER TEMPLATE — S540

RECEIVE REGISTRATION NOTICE ←- - - SEND REGISTRATION NOTICE

S450                    S550

END          END

FIG.10

30

FIG.11

FIG.12

PORTABLE TERMINAL 400'x | SERVER 500''' | PORTABLE TERMINAL 400'y

CALL PROCESSING

ORIGINATE CALL — S001

CALL ARRAIVAL — S002

ESTABLISH CALL — S003

SEND AUTHENTICA-TION REQUEST

AUTHENTICATION REQUEST

S460a

RECEIVE AUTHENTICA-TION REQUEST

S460b

SEND TERMINAL ID

SEND TERM-INAL ID

SEND GRIP-FEATURE

SEND GRIP-FEATURE

S470a

S470b

RECEIVE AUTHENTI-CATION DATA

S560

MEMBER AUTHENTICATION — S570

ACQUIRE POSITION INFO — S590

SEND DETERMINA-TION RESULT

S580a

RECEIVE DETERMINA-TION RESULT

S480

FIG.13

500
SERVER

400c

USER C

10

400a

USER A

400b

USER B

FIG.14

TRP

500
SERVER

P

ID, X

400c

CALL, X

REQ

USRE B

CALL, P

REQ, ID

1O

TGP

TGP

400a

USER A

400b

FIG.15

FIG.16

FIG.17

## INTERNATIONAL SEARCH REPORT

International application No.

PCT/JP2012/052893

A. CLASSIFICATION OF SUBJECT MATTER
*G06F21/20*(2006.01)i, *H04L9/32*(2006.01)i

According to International Patent Classification (IPC) or to both national classification and IPC

B. FIELDS SEARCHED

Minimum documentation searched (classification system followed by classification symbols)
G06F21/20, H04L9/32

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-109619 A (NTT Communications Corp.), 13 May 2010 (13.05.2010), claim 1; paragraphs [0010], [0023], [0024], [0036] to [0039]; fig. 2 (Family: none) | 1-13 |
| A | JP 2006-11591 A (Denso Corp.), 12 January 2006 (12.01.2006), claims 1, 4 (Family: none) | 1-13 |
| A | JP 2004-110196 A (Fuji Xerox Co., Ltd.), 08 April 2004 (08.04.2004), claim 1; paragraphs [0018] to [0021]; fig. 2 (Family: none) | 1-13 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>20 April, 2012 (20.04.12) | Date of mailing of the international search report<br>01 May, 2012 (01.05.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2012/052893 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-79427 A  (Toshiba Tec Corp.),<br>23 March 2006 (23.03.2006),<br>claims 1, 3<br>(Family: none) | 1-13 |

Form PCT/ISA/210 (continuation of second sheet) (July 2009)

**REFERENCES CITED IN THE DESCRIPTION**

**Patent documents cited in the description**

- JP 2010128600 A